# EUROPEAN PATENT SPECIFICATION

(11) **EP 3 932 178 B1**
(45) Date of publication and mention of the grant of the patent: **19.02.2025**
(21) Application number: 21187912.7
(22) Date of filing: 05.06.2015
(51) Int. Cl.: A01F 15/07

(54) **IMPROVEMENTS IN AND RELATING TO BALE WRAPPING MACHINES**
VERBESSERUNGEN AN ODER IN ZUSAMMENHANG MIT BALLENWICKELMASCHINEN
AMÉLIORATIONS APPORTÉES ET RELATIVES À DES ENRUBANNEUSES DE BALLES

(30) Priority: 06.06.2014 GB 201410117; 10.09.2014 GB 201416021; 13.03.2015 GB 201504329
(43) Date of publication of application: 05.01.2022
(62) Divisional of application: 15726978.8
(73) Proprietor: Idough Investment Company, Co. Carlow (IE)
(72) Inventor: Lacey, Liam, deceased (IE)
(74) Representative: Tomkins & Co

(56) References cited:
- EP-A1- 0 394 011
- EP-A1- 1 386 532
- EP-A1- 2 348 809
- GB-A- 2 241 916
- JP-A- H0 523 041
- US-A- 5 740 662

## Description

### Field of the Invention

The invention relates to a wrapping machine, in particular to a bale-wrapping machine for use in wrapping bales with a plastics wrapping film, of the kind that are suitable for mounting onto the front or rear of a tractor for example directly via a three-point linkage or indirectly, for example via a loader. A bale wrapping machine of the invention can be used to wrap any suitable article(s) including waste materials. The invention is particularly concerned with wrapping machines for wrapping bales of agricultural materials such as silage, grain, hay, straw, maize, beet pulp, beet tops, and the like (hereinafter referred to as "fodder") with a plastics film, which preferably is air tight and water tight.

The device of the invention may also be used in conjunction with machines for compacting and wrapping general farm and agricultural waste products, such as waste plastics and the like, and for wrapping other loose materials and objects such as comminuted peat moss, saw dust, wood shavings, wood chippings, brewery waste, bricks, blocks, cartons and the like. Machines have been developed which both bale and apply a wrapping material. Such machines are specialised combination machines for both baling and wrapping. For example, they typically cannot be loaded with an already formed bale for wrapping thereof.

### Description of related technologies

For machines that are for wrapping already formed bales that have been left on the ground for later wrapping, there are a number of challenges. The machine has to be able to engage the bale, lift the bale off the ground, and transfer it onto the bale wrapping machine for wrapping thereof. After wrapping it has to return the bale to the ground. All of this has to be achieved with minimum handling damage to the bale and indeed its wrapping. Also it needs to be achieved in a manner which is as easy as possible for an operator of the machine.

All of these requirements, provide another challenge. That is, to make a machine which is as simple as possible, for example requires the minimum number of parts to construct, yet is efficient, for example providing a wrapping output that is comparable to more complex machines.

Providing a machine which is as simple as possible requiring a lesser number of parts to construct is not trivial given the complexity of the actions that need to be undertaken by the machine.

Typically, such a machine needs a lifting mechanism for lifting the bale off the ground. Furthermore it needs a wrapping mechanism, typically a wrapping arm which rotates (or orbits) about the periphery of the bale for wrapping thereof. Such machines often include a rotation mechanism for rotating the bale while successive wraps are being applied so that the wrap is applied to the entire bale in successive overlapping wraps of wrapping material. The machine also needs what will be referred to herein as a "cut and start" or "cut and hold" mechanism. This is a mechanism that will cut the wrapping material after the bale has been wrapped so that the wrapped bales can be released but holding the cut end of the wrapping material. The mechanism holds the wrapping material for a number of wraps about the bale and then releases it when the wrapping material has been sufficiently overlaid so that it will not come loose from the bale. It then repeats its cut and hold function when the bale wrapping cycle is completed. The cycle is then repeated.

Machine manufacturer Elho provide a machine under the "Softliner" brand name that has a sling loading arm. The arm extends from the rear of the machine. Where the machine is rear mounted, for example on the rear three-point linkage of a tractor, an operator reverses the machine up to a bale. He then actuates a mechanism which brings the sling arm out and over the bale in a reverse direction from the rear of the machine. The sling arm pulls the bale forward from the rear of the machine onto the machine. Where the machine is forward mounted, for example on the front three point linkage of a tractor, an operator drives the machine up to a bale. He then actuates a mechanism which brings the sling out and over the bale in a forward direction. The sling arm pulls the bale backwards towards the tractor and onto the machine.

US patent number 5, 740, 662 describes a bale wrapping apparatus which has a frame forming part of a chassis. The frame forms a substantial inverted U-shape which has sufficient vertical and horizontal clearance so that the machine can be moved forward to collect a bale while in a forward moving direction. The bale passes underneath the frame part of the chassis and into the centre of the machine where it can be picked up by rollers for wrapping thereof. The frame part of the chassis also forms a tower for supporting a wrapping arm. The bale wrapping apparatus is trailed behind a tractor. Accordingly, it has two positions. It has an "in-line position" where the machine is substantially behind the tractor for travelling on roads etc. It also has an "offset position" where the machine is offset to one side of the tractor. In the in-line position, the machine cannot pick up a bale in a forward moving direction (because the tractor cannot drive across the bale). In the offset position the tractor drives alongside the bale and the machine picks it up. The machine is moved between the in-line position and the offset position by virtue of having an adjustable draw bar which allows for a relative offset of the machine to the tractor.

International patent publication WO 2010/060793; Korean patent KR 20100116487; Korean patent KR 10110777; European patent publication EP 2123145; European patent publication EP 0234 763 and International patent publication WO 2006/093374 shows a bale wrapping machine where the main chassis of the machine is constructed of (non-unitary) separate parts for example parts bolted together.

European patent publication EP12970419 describes a cut-and-hold device which grips film using a screw or worm drive. European patent publication EP1386532 discloses a bale wrapping machine with three and four arm configurations.

There remains a need for a simple construction of machine that is easy to make yet is versatile in operation.

### Summary of the Invention

In one aspect, the present invention provides a machine which is relatively simple in construction. It is made with a substantially less number of parts than previous constructions. Furthermore it is very versatile. It can be mounted on a front loader, rear loader arm, a front three point linkage, a rear three point linkage, it may be trailed. It may be stationary, for example placed on a stand, for example in a yard, and the bales can be brought to it for wrapping. In such use, it is typically operated by a stationary tractor, or some other stationary motor/engine. In this respect it will be noted that while the term tractor is utilised it will be appreciated that such an expression includes any suitable propulsion arrangement, including other vehicles.

The present invention also provides a bale wrapping machine which applies successive overlying wraps of wrapping material, the bale wrapping machine comprising:
(i) a wrapping mechanism for applying wrapping material to a bale;
(ii) a bale supporting arrangement; and
(iii) a cut and hold mechanism
wherein the machine comprises three rotating wrapping arms that, in a repeated working cycle for wrapping successive bales, have a first wrapping configuration where they are spaced substantially equally apart, for cooperatively rotationally wrapping a bale with wrapping material, and have a second configuration where, at the start of a wrapping cycle, and at the end of a wrapping cycle, the three working arms may be brought together proximate each other so that respective wrapping material from each arm may be cut and held by one cut and hold mechanism. The cut and hold and the three arm arrangement can be utilised in any configuration of machine described herein.

This is a simple yet highly effective construction. In particular, such an arrangement can be utilised with the cut and hold devices of the invention, the chassis of the invention and the bale wrapping machines of the invention including those with the loading arms.

In one simple arrangement, one arm acts a main or master arm and the other two arms act as auxiliary or slave arms. The first arm can be utilised to move the other two to a desired position.

In one aspect the invention provides a bale-wrapping machine for wrapping a bale of material with wrapping material, comprising:
means for engaging the bale for wrapping and for rotating the bale about a substantially horizontal axis:
a main rotary arm for supplying a first strip of wrapping material to the bale as the bale is turned about the horizontal axis; and two auxiliary wrapping arms for supplying a second and third strip of wrapping material as the bale is rotated around the horizontal axis; wherein the auxiliary arms are pivotable relative to the main arm wherein the first auxiliary wrapping arm and second auxiliary arm are movable in a continuous wrapping cycle for wrapping consecutive bales between a position in which all the arms are arranged adjacent to each other between wrapping of consecutive bales for cutting and holding of the wrapping and a wrapping position where the arms are positioned equidistant from each other. The main and auxiliary arm arrangement can be utilised in any configuration of machine described herein.

Both auxiliary wrapping arms may be pivotably mounted on the same axis or can be pivotally mounted on different axes.

Both auxiliary wrapping arms may be pivotably mounted on the same side of the main arm or may be pivotably mounted on opposite sides of the main wrapping arm.

The wrapping machine will have means to move each auxiliary wrapping arm from the rest position to the wrapping position comprising of a first actuator that moves the first auxiliary wrapping arm relative to the main wrapping arm and a second actuator that moves the second auxiliary wrapping arm relative to the first auxiliary wrapping arm.

A linkage mechanism, for example comprising two link arms that pivot relative to each other, may form part of a folding mechanism that allows both auxiliary arms to be moved proximate the main wrapping arm.

As described herein one cut and hold mechanism can be utilised to cut and hold the film strip from all the wrapping arms when wrapping is complete.

It is desirable that in the direction for rotation of wrapping the main arm follows the auxiliary arms. This allows for ease of bringing the arms together for the cut and hold step in a wrapping cycle.

In such a bale wrapping machine the cut and hold mechanism may be mounted in a fixed substantially vertical orientation. Desirably, it is mounted at a position where it is below the (level of the) wrapping material being applied to the bale. This means it is safely out of the way when in the closed position and does not interfere with wrapping material being applied to the bale. Desirably the cut and hold mechanism has a construction that is in accordance with the present invention as set out herein.

For example, the cut and hold mechanism may be provided with an anti-torsion mechanism to resist twisting of the cut and hold mechanism in its open position.

The cut and hold mechanism may be mounted at a position where it is below the wrapping material being applied to the bale, and desirably has an operational cycle with
(i) a wrapping material engaging step where it extends substantially vertically upwardly to catch the wrapping material from all three wrapping arms;
(ii) a cut and hold step where it retracts substantially vertically downwardly to cut and hold the wrapping material thus allowing release of a bale that has been wrapped and holding the material for the next wrapping cycle; and
(iii) a wrapping start step where the wrapping material is released after the wrapping material has been sufficiently wrapped on itself to hold itself on the bale.

The extent to which it extends upwardly is great enough to ensure that the entire width of the wrapping material is caught by the device. Furthermore, it can also retract out of the way for wrapping of the bale. A bale wrapping machine according to the present invention may further comprise a rotation mechanism for rotating the bale while successive wraps are being applied so that the wrap is applied to the entire bale in successive overlapping wraps of wrapping material, and the machine further comprises an automated control that automatically relatively adjusts the rotation of the bale and the speed of wrapping arm movement so that the machine can operate whether one, two or all three wrapping arms are applying wrapping material. In this way there are not exposed parts of the bale between successive strips of material because the automatic adjustment ensures that each wrap overlaps the last wrap about the entire perimeter of the bale. Without this adjustment successive wraps would not overlap about the entire perimeter of the bale. The automated control can be utilised in any configuration of machine described herein.

The wrapping arms may be mounted on a common slew ring. In such a three arm arrangement, all of the arms are arranged to rotate at the same speed.

One particularly important aspect that may be incorporated in a wrapping machine of the present invention is a very simple, strong yet versatile chassis.

One of the issues that arises when trying to make a wrapping machine that is as compact as possible, is that the wrapping action is not simple and requires quite a complex mechanism.

One solution to this issue is to use alternatives to some of the more conventional parts which are found in such a wrapping machine.

The present invention provides a chassis that may be included in a wrapping machine of the invention, the chassis comprising a main chassis member which has: an upper substantially horizontal portion upon which to mount a wrapping arm;
a lower substantially horizontal portion upon which to mount at least part of a bale supporting arrangement; and
a substantially upright portion running from the upper portion to the lower portion,
wherein the main chassis member is a unitary member that forms the upper substantially horizontal portion, the lower substantially horizontal portion and the substantially upright portion.

In relation to the present invention the term "unitary" means that the main chassis member is constructed as a single piece. In this respect there is structural integrity the whole way from the lower part of the chassis to the upper part of the chassis and thus to any machine made utilising the chassis.

Desirably the chassis is formed by taking a single length of material and working it, for example bending it, to the desired shape. The chassis may be formed by forming a material in a desired shape such as casting a metal in a desired shape. Less desirably, the main chassis member can be made of pieces that are permanently attached to each other, such as by welding. For the purposes of simplicity of construction, it is desirable that welding is not utilised to form the unitary chassis member. Separate parts that are held together, such as by bolts, do not form a main chassis member chassis within the meaning of the present invention.

In the present invention the substantially upright portion and the upper substantially horizontal portion together are often referred to as a "tower" or "mast".

In the past wrapping machines comprised a base or lower chassis part, which had separately bolted thereto a tower frame part. Advantageously, in the present invention, wherein both the tower and lower chassis frames are combined into one fabrication (i.e. a unitary member), the weight and number of component parts are significantly reduced. At the same time the structural strength and rigidity of the machine is increased.

The chassis can be mounted directly to the three point linkage of a tractor. In particular, the mounting points for a three point linkage can be provided directly on the chassis.

Such a chassis also provides a suitable structural support for a loading arm that may be incorporated in a wrapping mac of the invention (as described below).

While the main chassis member may be formed of any suitable material, desirably it is formed by a hollow section material. For example it may be formed from box section material. Suitably it is formed by tubular material such as a tubular member.

The main chassis member may be formed from a single piece of material shaped to form the main chassis member. For example, it may be formed in the desired shape or bent into shape. Desirably the single piece of material is tubular.

This results in an extremely simple yet highly efficient method of construction of a wrapping machine. Furthermore, the machine comprising such a chassis will have very strong structural properties.

Furthermore, such a chassis is extremely versatile. It can be utilised in a machine which is mountable on a front or rear three point linkage, a front or rear loader, utilised as a stand-alone or stationary machine, and/or a trailed machine. It may be utilised in a two-part arrangement of the invention as will be described below, for example mounted on a trailer or stand. Furthermore the chassis can be utilised as a chassis for a machine that can wrap round or rectangular (including square) bales.

In one arrangement the chassis is provided with one or more ground engaging members, for example one or more rollers or wheels or combinations thereof. This can allow the weight of the chassis and any bale on it to be at least partially transmitted to the ground via the ground engaging members. For example when mounted on a three-point linkage the chassis could be lowered on by the three point linkage so that substantially all of the weight is taken up by the ground engaging members.

Desirably the main chassis member is formed from a unitary member which runs from opposing sides on the upper substantially horizontal portion to form two substantially upright portions, and two lower substantially horizontal portions. This results in a very strong structural arrangement. The main chassis member may be shaped so as to be substantially symmetrical about a vertical plane.

The unitary chassis optionally comprises two lower substantially horizontal portions, one of which is longer that the other. In such an arrangement, the longer lower substantially horizontal portion may form an axle upon which one or more rollers forming part of a bale supporting arrangement is rotatably mounted. This arrangement is a construction which is particularly suited to an arrangement of a wrapping machine of the invention which has a loading arm as described below. In particular, the chassis is suited to an arrangement where the loading arm carries a rotatable roller. In such a case, at the rotatable roller will substantially align (both horizontally and vertically) with the shorter substantially horizontal portion.

Having the lower substantially horizontal portion form an axle is most advantageous, because this arrangement allows for simplicity of construction and also imparts structural strength. For example a lower substantially horizontal portion forms an axle upon which one or more rollers forming part of a bale supporting arrangement is rotatably mounted.

In one arrangement, the chassis may comprise two lower substantially horizontal portions each of which form an axle. In such an arrangement rollers on those axles will be fixed in position.

In an alternative construction one roller is fixed in position by virtue of being rotatably mounted on a lower substantially horizontal portion. A second roller is movable, optionally by virtue of being mounted on a loading arm as will be described below.

In this respect "fixed" does not mean fixed against rotation. The roller can rotate. However, the roller is fixed in the sense that it does not otherwise move relative to the main chassis member. In particular it does not move position during loading or wrapping.

The present invention thus provides an arrangement where two lower substantially horizontal portions each form an axle upon which one or more, optionally driven, rollers forming part of a bale supporting arrangement are rotatably mounted.

Thus within the present invention each roller may be fixed, though desirably one is movable. In particular, it is desirable that there are a pair of opposing rollers. In such an arrangement it is advantageous that the opposing rollers are operable to act as a pick-up mechanism for a bale. For example, at least one may move apart from the other to allow the machine to pick up a bale for wrapping, and then move back to pick up the bale. Together then, the opposing rollers form a bale support arrangement.

In one arrangement one roller is fixed in operation but is adjustable between at least two fixed positions to accommodate different size bales. For example it is desirable that the rollers can accommodate bales with a diameter in the range from about 1 metre up to about 1.6 metres. More particularly it is desirable that the respective fixed positions allow an adjustment both in a generally horizontal and in a generally vertical direction. It is important that not only is the bale seated on the rollers but also that the bale is sufficiently centred so that wrapping is about the centre of the bale. It will be appreciated that for a cylindrical bale the further the applied wrap is from passing about the centre of the bale the more likely the wrap is to slip off the bale. With bales of differing diameters, and without adjustment a larger diameter bale will sit higher up than a smaller diameter bale. Accordingly it is desirable that the fixed positions are configured so as to maintain a substantially centred (vertical and horizontal) position relative to the wrapping arm(s).

It is desirable that in a chassis incorporated into a wrapping machine of the invention, a lower substantially horizontal portion forms an axle upon which one or more rollers forming part of a bale supporting arrangement is rotatably mounted.

Additionally or alternatively the longer lower substantially horizontal portion may form a step-up member of the type described herein. For example the lower horizontal portion may be a continuous piece that extends from one side of the chassis to the other.

It is desirable that the main chassis member forms two spaced apart parts which follow substantially similar paths. In one arrangement it turns back along itself and diverges somewhat in the upper horizontal portion. It then forms two spaced apart but substantially parallel uprights, which then turn back to a position underneath the upper horizontal portion to form the lower horizontal portions.

In a chassis incorporated into a wrapping machine of the present invention it is desirable that a lower substantially horizontal portion forms an axle upon which a driven roller forming part of a bale supporting arrangement is rotatably mounted; and a drive motor for the roller is at least partially mounted within the roller. Such an arrangement is clearly advantageous for any roller that is driven. Again, it provides for simplicity of structure yet very high structural integrity. In such an arrangement, the axis of rotation of the roller may be offset from a central axis of the lower substantially horizontal portion to the extent required so that both the drive motor and the roller can be mounted. For example, it may be advantageous to have the drive motor extend into the roller.

A machine utilising such a chassis can be used in an in-line position or an offset position.

In relation to a machine of the present invention the term "in-line" or "in-line position" refers to being substantially aligned in a forward or reverse direction relative to a vertical plane through the centre of a bale (in the direction of travel) in position on the machine for wrapping. For example a wrapping machine that is in-line with a tractor will be mounted to the front or to the rear of a tractor.

In relation to a machine of the present invention the term ""offset" or "offset position" refers to being substantially offset in a forward or reverse direction relative to a vertical plane through the centre of a bale (in the direction of travel) in position on the machine for wrapping. For example a wrapping machine that is offset relative to a tractor will typically be attached to a tractor where the vertical plane through the central of a bale in position on the machine for wrapping is to one side of the tractor.

For an in-line wrapping machine mounted to the front of a tractor, typically the operator can drive forward to pick up a bale, and the tractor, the wrapping machine and a bale to be picked up will all be substantially in-line.

For an in-line wrapping machine mounted to the rear of a tractor, the operator must reverse into a bale to be picked up, and the tractor, the wrapping machine and a bale to be picked up, will all be substantially in-line.

In terms of a bale to be wrapped, it can be in-line - that is it is picked up from a position where it is substantially in-line with the wrapping machine; or it can be offset, that is it is picked up from a position offset from the wrapping machine, and then brought to a position where it is in-line with the machine. Where a bale is picked up from an offset position it typically is picked up from a position where it is to one side of the machine.

The chassis described herein may be used in any conjunction with any other aspect of a machine described herein.

Another aspect of the invention is the provision of a loading arm mechanism. The loading arm can be used in conjunction with any other aspect of a machine described herein.

Also disclosed herein is a bale wrapping machine, comprising:
a wrapping mechanism for applying a wrapping to the bale;
a rotation mechanism for rotating a bale during wrapping thereof; and
a bale loading arm for engaging a bale and for bringing a bale to a position on the machine where it can be wrapped;
the bale loading arm being moveable from an open position where it can extend out from one side of the machine and pass over the top of a bale, that is an offset position relative to the machine, and engage the bale from a far side thereof and then retract to a closed position to move the bale to a position on the machine where it can be wrapped.

This is a very simple arrangement that allows for loading of a wrapping machine of the invention. In particular, it allows an operator to drive forward to pick up a bale, even in the case that the machine is rear mounted and is in-line with the tractor. Typically, with such rear mounted machines, it was necessary to reverse into the bale when the machine is mounted in line with a tractor, for example when mounted on a rear three point linkage. Accordingly, a driver no longer needs to look directly behind him when loading/unloading. The machine of the invention can load a bale from both an inline and offset position.

Furthermore, it is desirable that the bale loading arm is mounted on a machine which has the chassis as described above. The bale loading arm may be used in any conjunction with any other aspect of a machine described herein.

In one simple arrangement, retraction of the loading arm causes the bale to roll along the ground towards the machine. This is particularly, though not exclusively, suited to machines adapted to wrap round bales.

Optionally, the loading arm further comprises a lifting mechanism to lift the bale off the ground so that it is held off the ground by the arm. This is particularly, though not exclusively, suited to machines adapted to wrap rectangular (including square) bales.

The arm may swing outwardly and upwardly to open, for example as a gull-wing arm. The arm may swing downwardly and inwardly to close, for example as a gull-wing arm.

Unloading is simple too, because the loading arm may simply move out to one side of the machine to allow the bale to be released. In such an arrangement, the loading arm leaves the bale on the ground in a gentle manner which does not cause damage to the bale or any wrapping applied to it.

It is desirable that the bale loading arm carries a drive means to drive movement of the bale. Any suitable drive means may be utilised. For example the drive means may be a drive means that imparts a rotational force to the bale. For example the drive means may be a rotation mechanism. In one simple arrangement that rotation mechanism may be at least part of the rotation mechanism for rotating the bale for wrapping thereof.

For simplicity of construction of the overall machine it is desirable that the bale loading arm carries at least part of the rotation mechanism for wrapping a bale. This means that the bale loading arm has two functions, one for loading the arm, and the second for forming part of a mechanism to rotate the bale on the wrapping machine for wrapping thereof. Again this results in a reduced number of parts and in simplicity of construction.

Desirably, the bale loading arm carries at least one roller. Desirably that roller can be driven to rotate. For example, it may be driven to rotate when in use to load a bale. It may additionally or alternatively be driven to rotate during the wrapping of the bale. In such an arrangement, a portion of the loading arm may form an axle upon which one or more rollers forming part of a bale supporting arrangement is rotatably mounted.

The rotation mechanism may comprise two opposing rollers and one of those rollers is optionally carried on the bale loading arm. Those opposing rollers may be beltless or may have a belt, such as a slack belt, mounted across them to form a cradle for a bale.

Two opposing rollers may provide a support upon which the bale is rotatable during wrapping thereof and one of those rollers may be carried on the bale loading arm.

In an arrangement which is particularly, though not exclusively, suitable for rectangular bales, two opposing rollers provide a support upon which the bale is rotatable during wrapping thereof and both of those rollers are carried on the bale loading arm.

A bale wrapping machine of the invention may further comprise an adjustment mechanism to increase the height to which the arm opens. This can be important, because it may be otherwise difficult to get sufficient clearance upon opening of the arm to pass over a bale.

For example a machine tilt mechanism may be utilised to tilt the machine to increase the height to which the arm opens. In such an arrangement, and the machine will tilt upwards on a side thereof on which the loading arm is mounted.

Additionally, or alternatively, the adjustment mechanism may articulate two parts of the arm relative to each other to increase the height to which the arm opens. Again this provides for greater clearance.

Furthermore, such an arrangement provides for sufficient ground clearance when closing the arm. For example, where the bale is being picked up on hilly ground, the arm may otherwise not have sufficient ground clearance as it may catch ground that is elevated.

Additionally, or alternatively, the adjustment mechanism may articulate two parts of the arm relative to each other to reduce the height at which the arm closes. Again, this may assist in allowing the arm to engage at a position sufficiently low down on the bale. In particular, it is desirable to engage the bale at a position proximate the ground. Such adjustment may be necessary to compensate for a difference in height levels of ground. It will be appreciated that the present invention shows and exemplifies a loading arm that engages a bale at a relatively high up position, for example above a midpoint thereof. Furthermore the loading arm may engage the top of a bale and for that reason it is desirable that the machine comprises a pressure relief mechanism as described herein.

Desirably, in the bale wrapping machine of the present invention the wrapping mechanism comprises a wrapping arm, and the bale loading arm and the wrapping arm are supported by an upright (mast) on the bale wrapping machine. Where utilised with a chassis of the present invention, this gives a very simple yet structurally strong arrangement.

The bale loading arm may have a portion that follows a path that, in an open position, runs in a direction outwardly and away from one side of the machine and has a second portion that follows a path that runs in a direction substantially perpendicular to that of the first portion and substantially parallel to a vertical longitudinal plane of the machine. In such an arrangement, the second portion may form an axle upon which one or more rollers forming part of a bale supporting arrangement is rotatably mounted.

Desirably it is only the second portion that engages the bale to move it towards a loaded position.

Where the bale is a "round" bale of a type that has a cylindrical outer profile, and that is lying on its side, for ease of loading it will be approached in a direction substantially parallel to its longitudinal axis. For such an approach the arm is typically in an outstretched position and passes over the bale. The arm is then retracted. This engages (typically only) the second portion against the bale and causes it to pull the bale towards the wrapping machine. Oftentimes the bale will roll inwards as it is pulled by the arm. Indeed it is typically rotated. In this way the loading arm always has contact with and has control of the bale.

For such operation, and in general, it is desirable that the rotation mechanism comprises a roller that is carried on the second portion. The longitudinal axis of the roller and that of the second portion are substantially parallel.

Desirably, the loading arm is pivotally mounted at at least one point, which in use, for example in an outstretched position above the bale, is above a bale being loaded.

In a simple construction, the loading arm may be pivotally mounted at at least two points.

The bale loading arm may comprise two portions that are articulated relative to each other. This may allow for shortening or lengthening of the arm as is desired.

The articulated portions may articulate relative to each other at a point, which in use, is above a bale being loaded.

A locking mechanism may be provided to lock the loading arm in its closed position. For example the locking mechanism may lock the loading arm to at least part of the chassis. This provides for an arrangement with greater strength and thus can withstand the forces experienced while rotating the bale for wrapping thereof. In one simple arrangement the locking mechanism comprises a latch which holds the arm in the closed position. Desirably the latch is automatically operable to latch the loading arm in position for wrapping of the bale and then releasing the loading arm so that the bale may be unloaded.

In an arrangement where it is desirable to accommodate different size bales, for example it is desirable to accommodate bales with a diameter from about 1 metre up to about 1.6 metres, it may be appropriate to have a locking mechanism which is adjustable so as to provide a different locking position, optionally fixed positions during operation of the machine, for the loading arm.

More particularly it is desirable that the different locking positions allow an adjustment both in a generally horizontal and in a generally vertical direction. As above it is important that the bale is sufficiently centred so that wrapping is about the centre of the bale. It will be appreciated that for a cylindrical bale the further the applied wrap is from passing about the centre of the bale the more likely the wrap is to slip off the bale. With bales of differing diameters, and without adjustment, a larger bale (i.e. a bale with a larger diameter) will sit higher up than a smaller bale. Accordingly it is desirable that the different locking positions are configured so as to maintain a substantially centred (vertical and horizontal) position relative to the wrapping arm(s).

One or more guides may be provided on the chassis to ensure the arm closes along the same path and does not move out of position, for example due to a heavier or an overweight bale. In one arrangement a reinforcing elbow piece reinforces the loading arm.

It will be appreciated that a machine of the invention with such a loading arm can pick up a bale from both an in-line and an offset position relative to the wrapping machine.

The machine of the present invention can be utilised, for example mounted, in an in-line position to the front or to the rear of a tractor. It can be trailed, for example having wheels, such as wheels mounted on its chassis. When utilised, for example mounted, in an in-line position, it can engage a bale for wrapping which is disposed to one side of the machine and bring it from one side of the machine, towards the centre of the machine where it can be thereafter picked up for wrapping thereof. This is particularly important when the machine is utilised in a position where it is to the rear of a tractor, for example, when it is mounted (in-line with the tractor) on a rear three point linkage. In prior art machines, it was necessary to reverse into the bale to be wrapped to pick it up because both the chassis of the machine itself and the tractor prevented picking up the bale when travelling in a forward direction.

The machine of the invention can be configured to be offset relative to a tractor. For example it could be trailed in a manner where it is offset. Furthermore it can be adapted to be releasably engageable with a trailer or support stand.

The machine of the invention can be oriented in two different configurations, for example configurations that are substantially 90⁰ apart. For example a machine of the invention can be configured so that the axis of rotation of rollers which rotate the bale for wrapping can be substantially parallel to the direction of travel, or be configured so that the axis of rotation of rollers which rotate the bale for wrapping can be substantially perpendicular to the direction of travel. In the former case this orientation can be used as desired, for example, when the machine is mounted inline with a tractor for example on a front or rear three-point linkage. In the latter case this orientation can be used as desired, for example, when the machine is mounted in an offset position with respect to a tractor for example when trailed in an offset position.

Where the machine comprises a loading arm, as described herein, the loading arm can thus also be oriented in two different configurations, for example configurations that are substantially 90⁰ apart. For example a machine of the invention can be configured so that the axis of pivoting of the loading arm can be substantially parallel to the direction of travel, or be configured so that the axis of pivoting of the loading arm can be substantially perpendicular to the direction of travel. In the former case this orientation can be used as desired, for example, when the machine is mounted in-line with a tractor for example on a front or rear three-point linkage. In the latter case this orientation can be used as desired, for example, when the machine is mounted in an offset position with respect to a tractor for example when trailed in an offset position. For example when the axis of pivoting of the loading arm is substantially perpendicular to the direction of travel, the loading arm can open outwards and upwards in the direction of travel and then the machine can be moved forward until the loading arm passes over and is front of the bale. The loading arm can then be utilised to load the bale for example by moving the bale along the ground in a direction substantially opposite to the direction of travel, and then onto the machine.

A further aspect disclosed herein is an alternative cut-and-start or cut-and-hold mechanism that can be utilised in any configuration of machine described herein.

Also disclosed herein is a cut and hold mechanism, for a wrapping machine of the invention which applies successive overlying wraps of wrapping material, the cut and hold mechanism for cutting and holding the wrapping material after an article is wrapped, the cut and hold mechanism opening to engage the wrapping material, and closing to cut and hold it, wherein when the cut and hold mechanism opens, it extends in length by an amount greater than its closed length.

This is an especially important aspect of the present invention. In particular, it allows for the retention of an overall compact structure. Desirably, the cut and hold mechanism is mounted in a substantially vertical orientation. This means that it can open and close in an up and down orientation relative to the main chassis of the machine. However, because it is compact in length, it can be accommodated in this orientation in a machine where there is relatively little clearance between the bottom of the machine and the lowermost point at which wrap is applied.

It is desirable that the cut and hold device incorporated into a wrapping machine of the invention comprises a multistage arrangement to move the mechanism from an open position to a closed position and from the closed position to the open position. Having multiple stages, for example at least two stages, allows for compactness in the closed position, and additional length in the open position.

It is desirable that the mechanism comprises a double acting arrangement to move the mechanism from an open position to a closed position and from the closed position to the open position. This means that power can be applied to open the mechanism and close it again.

It will be appreciated that any suitable configuration can be utilised to open and close the device. This includes rack and pinion, spring loading, and other such mechanical arrangements. Desirably however, the mechanism comprises at least one hydraulic cylinder.

For example the cut and hold device may comprise a multistage double acting hydraulic cylinder arrangement to move the mechanism from an open position to a closed position and from the closed position to the open position. This arrangement has the advantages that it opens to a greater length than is otherwise possible, and it is powered for opening and powered for closing.

The cut and hold device may comprise a multistage arrangement that comprises at least two single acting hydraulic cylinders which are arranged so that together they form a multistage hydraulic cylinder arrangement to move the mechanism from an open position to a closed position and from the closed position to the open position.

The cut and hold device may comprise at least two double acting hydraulic cylinders which are arranged so that together they form a multistage double acting hydraulic cylinder arrangement to move the mechanism from an open position to a closed position and from the closed position to the open position.

The cut and hold device may comprise a multistage double acting hydraulic cylinder arrangement to move the mechanism from an open position to a closed position and from the closed position to the open position.

The cut and hold mechanism may comprise a multistage arrangement to move the mechanism from an open position to a closed position and from the closed position to the open position, and wherein the arrangement comprises at least two extendable elements, for example hydraulic cylinders, one of which is carried on the other. This is a simple construction that allows for a compact arrangement in the closed position and a greatly extended arrangement in the open position.

The cut and hold device may comprise a multistage arrangement to move the mechanism from an open position to a closed position and from the closed position to the open position, and wherein the arrangement comprises at least two extendable elements, one of which is carried on the other and wherein the extendable elements extend in opposing directions. For example, such an arrangement may be a multistage arrangement to move the mechanism from an open position to a closed position and from the closed position to the open position, and wherein the arrangement comprises at least two extendable hydraulic cylinders, one of which is carried on the other and wherein they extend in opposing directions.

A simplified arrangement is where the cut and hold device comprises a multistage arrangement to move the mechanism from an open position to a closed position and from the closed position to the open position, and wherein the arrangement comprises at least two extendable hydraulic cylinders, one of which is carried on the other and wherein they are separate but are hydraulically interconnected so as to be extendable at the same time. Such an arrangement allows for a common source of power, for example a common hydraulic line to be utilised. It also acts to ensure both extend by approximately the same amount and simultaneously.

Desirably, the device is provided with an anti-torsion mechanism to resist twisting of the cut and hold mechanism in its open position. Such torsion can be experienced due to the pulling force of wrapping material against the cut and hold mechanism. This is particularly true where there are multiple webs of wrapping material being cut and held by a single mechanism.

For example, the anti-torsion mechanism may comprise a movable tube and an anti-torsion guide therefor.

Additionally, or alternatively, the anti-torsion mechanism may comprise a series of splines.

Additionally, or alternatively, the anti-torsion mechanism may comprise at least one roller. For example there may be a grooved roller that runs along a spline in a manner which resists torsion.

Additionally, or alternatively, the anti-torsion mechanism may comprise multiple frames that are slidably mounted in each other so as they extend they maintain a straight path.

Additionally, or alternatively, the anti-torsion mechanism may comprise an extendable mechanism that is splined on its exterior.

It is desirable that a cut and hold mechanism further comprises a self-cleaning mechanism to remove any residue of wrapping material off the cut-and hold mechanism as the cut-and hold mechanism opens or closes or both. For example, this may be a scraper to scrape any residue of wrapping material off the cut and hold mechanism as the cut and hold mechanism opens or closes or both.

The cut and hold device may further comprise a manual close mechanism adapted to allow an operator to manually place wrapping material in the cut and hold mechanism and manually close the cut and hold mechanism. This could be considered a manual release mechanism to either open or close the mechanism. It is provided proximate the cut and hold device, so that an operator of the machine can utilise it to reposition a web of wrapping material in the cut and hold device. This is very useful, for example where the machine has run out of wrapping material from one or more wrapping arms or wrapping material has broken. It allows an operator to reposition wrapping material from one or more wrapping arm into the cut and hold device and then close it so that it is in position for the start of the next wrapping cycle.

In order to get a clean cut and a strong hold on the material, in particular where multiple webs of wrapping material are being cut and held by the same device, it is desirable that the device closes by retracting and cuts and holds the wrapping material upon retraction.

Desirably the cut and hold mechanism is placed on the main chassis of the machine. The cut and hold mechanism remains in a closed state during the wrapping process. It opens at the end of the wrapping cycle or cycles to gather and hold the film. It cuts the film that is attached to the bale that has just been wrapped and this bale can thus then be unloaded from the wrapping machine. When a new bale to be wrapped is loaded onto the wrapping machine, the cut and hold mechanism opens after wrapping has begun and releases the film at a time when there are sufficient wraps so that the wrapping material is self-secured on the bale.

In contrast to existing mechanism which utilise a pivoting arm which raises up to gather the film, for example in a scissors type opening and closing action, the present invention provides an alternative construction.

In one simple arrangement there are at least two hydraulic cylinders. Desirably these are mounted in an inverse arrangement to each other. This means that one can extend in one direction and the other can extend in a substantially opposite direction. This means that even if the hydraulic cylinders are mounted in its side-by-side arrangement, (where they substantially overlap), once extended, they will extend by approximately twice the length of their respective extension strokes. In this respect the overall effect is that the two cylinders start with a length that is substantially equal to the length of one cylinder, but when each is extended the total extended length will be more than twice and up to approximately three times that of an unextended cylinder.

Also disclosed herein is a cut and hold mechanism for a bale wrapping machine for cutting and holding wrapping material which is applied by the machine, the cut and hold mechanism comprising a self-cleaning mechanism to remove any residue of wrapping material off the cut-and hold mechanism as the cut-and hold mechanism opens or closes or both, for example a scraper, to scrape any residue of wrapping material off the cut-and hold mechanism as the cut-and hold mechanism opens or closes or both. The cut and hold mechanism can be utilised in any configuration of machine described herein.

Such an arrangement is particularly convenient, as the cut and hold mechanism can otherwise become fouled by a build-up of residual material from the wrapping material. For example, when the mechanisms become hot, the wrapping material becomes more tacky and is more prone to leaving residue on the cut and hold device. Build-up of such material eventually leads to a degradation in the performance of the cut and hold device, and may ultimately break the device.

In a cut and hold device incorporated into a wrapping machine of the present invention it is desirable to provide one or more projections or one or more recesses, which interengage, so as to provide a self-cleaning mechanism for any wrapping material that may become adhered to the cut and hold device.

For example part of the cut and hold device may comprise a contoured tube. For example it may be a splined tube. The splines may also act as part of an anti-torsion arrangement as described herein.

Also disclosed is a cut and hold mechanism for a bale wrapping machine for cutting and holding wrapping material which is applied by the machine, the cut and hold mechanism comprising a wrapping material engaging portion that has at least two projections with a recess there between so that wrapping material held against the cut and hold mechanism abuts the projections and spans across the recess. The cut and hold mechanism can be utilised in any configuration of machine described herein.

For example, the wrapping material engaging portion may have projections in the form of a series of at least three splines. Again the splines can have more than function, and may have the other functions described herein.

This means that there is less surface area in contact with the wrapping material and thus the problem of residue from the wrapping material remaining on the cut and hold device is reduced.

Also disclosed herein is a bale wrapping machine which applies successive overlying wraps of wrapping material, the bale wrapping machine comprising:
(i) a wrapping mechanism for applying wrapping material to a bale;
(ii) a bale supporting arrangement; and
(iii) a bale lifting mechanism for lifting a bale off the ground,
wherein the bale lifting mechanism comprises:
at least one lifting tine projecting from a loading arm wherein the lifting tine is arranged to engage underneath or engage within the bale and to tilt upwards to lift the bale sufficiently to allow a roller on the loading arm engage underneath the bale.

Such an arrangement is suitable for, though not exclusively for, a rectangular bale. A plurality of tines may be provided. They may be adapted to pierce into the bale for lifting thereof, or to engage underneath the bale. The bale lifting mechanism can be utilised in any configuration of machine described herein.

The roller may be a driven roller. For example it may form part of a bale rotation mechanism for rotating the bale during wrapping thereof. Arrangements for such a roller are described in detail herein. Furthermore, such a roller is desirably rotatably mounted on a loading arm of the type described above.

For example, the machine may have a twin roller arrangement that is adapted to pick up a rectangular bale.

For additional stability, the machine, for example the loading arm may further comprise at least one ground-engaging support. Such a ground engaging support could take a part of the weight of the bale thus helping to stabilise the machine. The ground engaging support may be at least one wheel. For example, the ground engaging support may be at least one adjustable support for example a height adjustable support and/or swivel wheel, for example a jockey wheel.

In arrangement suitable for use with rectangular bales, though not exclusively so, the wrapping machine, and in particular the loading arm, may be provided with endless belts mounted about the twin rollers and adapted to form part of a rotation mechanism for rotating the bale for wrapping thereof.

The present invention also provides a bale wrapping machine that is provided in two parts: a first part which has a chassis which has a bale supporting arrangement and a wrapping mechanism for wrapping a bale supported thereon and a second ground engaging part that acts as a support for the first part, wherein the first part is releasably attachable to the second part. The two-part construction can be utilised in any configuration of machine described herein.

This is a very simple arrangement that allows a machine of the invention to be interchangeable. For example, the second part can be removed so that the machine of the invention can be mounted directly on a tractor, such as on a front or rear three point linkage or a front or rear loader.

Desirably the first part is releasably attachable to the second part by a mounting arrangement which mounting arrangement is also suitable for attachment to a three point linkage on a tractor. This means that the same fittings which are utilised to attach the machine to the three point linkage of a tractor, may also be utilised to attach it to the second part.

Suitably the bale wrapping machine is operable when oriented in two different configurations, for example configurations that are substantially 90⁰ apart. For example the first part may be releasably attachable to the same second part, or two different second parts in two different orientations.

The ground engaging part may have one or more wheels, for example in the form of a dolly or trailer. Suitably, it is provided with a (detachable) drawbar. Additionally or alternatively, the ground engaging part may have one or more caster wheels. In such an arrangement it can be trailed behind a machine in an in-line or offset position.

Additionally or alternatively, the ground engaging part may form a stand with one or more legs. Optionally in such an arrangement and/or any legs may be detachable or retractable.

A main concept of the present invention is to provide a kit of parts so that a machine suitable for wrapping bales that is adapted to be mounted directly on a tractor (for example a three point linkage) is (easily) convertible into a trailed machine and desirably an offset trailed machine. The machine is operable in both mounted and trailed positions.

It will be appreciated that a machine of the invention may be operated in an orientation where a loading arm extends out to a side in a direction of travel or an orientation where a loading arm extends out to the front in a direction of travel.

A bale wrapping machine of the invention may be provided in three parts: a first part which has a chassis which has a bale supporting arrangement and a wrapping mechanism for wrapping a bale supported thereon and a second ground engaging part that acts as a support for the first part, wherein the first part is (releasably) attachable to the second part and a third part which is a drawbar. This construction can be utilised in any configuration of machine described herein.

The second part, (the ground engaging part) and the third part (the drawbar) may each be connected to the first part, for example the chassis thereof. This means that the ground engaging part and the third part do not have to be connected to each other directly, but may instead be each connected to the chassis. For example the ground engaging part can be attachable so as to extend on an underside of the chassis and/or the drawbar can be attached so as to extend in a towing direction. In one simple arrangement the drawbar may be attachable to an upright portion of the chassis. The upright portion to which it is attachable may be an upright portion (of the tower or mast) that supports the wrapping arms. Desirably, as above the drawbar is an adjustable draw bar which allows for a relative offset of the machine to the tractor. The drawbar may carry at least part of an offset mechanism for example an actuator to effect the offset such as a hydraulic ram.

In any configuration of the invention a bale wrapping machine may have two parts: a first part which has a chassis which has a bale supporting arrangement and a wrapping mechanism for wrapping a bale supported thereon and a second ground engaging part that acts as a support for the first part, wherein the second part includes a pair of wheels and the distance between the wheels (for example measured as the distance from the outside of one wheel to the outside of the other transversely to the direction of travel) is adjustable between a working configuration (for wrapping) where the wheels are further apart and a compact configuration where the wheels are closer together. Such an arrangement can be utilised with any configuration of machine described herein. The two parts may be releasably attachable to each other.

In any embodiment the ground engaging part may itself be provided in two or more separate parts. For example it may comprise two parts, with a ground engaging support such as a wheel on each part. One part with one wheel may be fixed, while the other part can be moveable to provide (width) adjustment.

Also disclosed herein is a bale wrapping machine that has a chassis which has a bale supporting arrangement and a wrapping mechanism for wrapping a bale supported thereon and a pair of wheels wherein the machine has a compact configuration wherein, in the compact configuration at least one wheel is located at a position in which it would interfere with wrapping of a bale, for example in a position in which it would interfere with the bale sitting on the bale supporting arrangement.

For example the bale supporting mechanism may be a pair of rollers and the wheel may be located between the pair of rollers at a position in which it would interfere with the bale sitting on the rollers. Desirably the longitudinal axis of the rollers are orientated transversely to the direction of travel and an axis (for example that of an axle) on which the wheel rotates is also orientated transversely to the direction of travel. As above it is desirable that the machine is adjustable between a working configuration (for wrapping) where the wheels are further apart and the compact configuration where the wheels are closer together. In the compact configuration one wheel may be in a position in which it would interfere with wrapping of a bale and in a working configuration it is moved (for example by extending the distance between wheels as set out above) to a position in which it would not interfere with wrapping of a bale.

In one possible arrangement the top of the wheel is at a position that is higher than the top of the rollers forming the bale supporting arrangement.

As above the machine may be interchangeably converted, utilising a kit of parts, from a mounted machine to a trailed machine.

As above, it is desirable that the chassis comprises a main chassis member which has:
an upper substantially horizontal portion upon which to mount a wrapping arm;
a lower substantially horizontal portion upon which to mount at least part of a bale supporting arrangement; and
a substantially upright portion running from the upper portion to the lower portion.

In such an arrangement the ground engaging part (for example comprising one or more wheels) desirably is mounted to the lower substantially horizontal portion. And desirably it is adjustably mounted thereon for (width) adjustment of the machine.

Where the chassis comprises a main chassis member that is a unitary member that forms the upper substantially horizontal portion, the lower substantially horizontal portion and the substantially upright portion, it is desirable that the ground engaging member is connectable to the lower substantially horizontal portion.

Where the main chassis member is formed from a unitary member which runs from opposing sides on the upper substantially horizontal portion to form two substantially upright portions, and two lower substantially horizontal portions, it is desirable that the ground engaging portion engages with each of the two lower substantially horizontal portions. For example the ground engaging portion and the two lower substantially horizontal portions may be slidably moveable relative to each other, for example by telescopic movement, so as to allow (width) adjustment.

It is desirable that a first part of the bale wrapping machine of the invention comprises a chassis for a wrapping machine, the chassis comprising a main chassis member which has
(i) an upper substantially horizontal portion upon which to mount a wrapping arm;
(ii) a lower substantially horizontal portion upon which to mount at least part of a bale supporting arrangement; and
(iii) a substantially upright portion running from the upper portion to the lower portion
wherein the main chassis member is a unitary member that forms the upper substantially horizontal portion, the lower substantially horizontal portion and the substantially upright portion.

Also disclosed is a bale wrapping machine which applies successive overlying wraps of wrapping material, the bale wrapping machine comprising:
a wrapping mechanism for applying wrapping material to a bale;
a bale supporting arrangement;
a loading arm for loading a bale for wrapping thereof; and
a control mechanism for automatically relieving pressure if the pressure of the loading arm against the bale exceeds a pre-determined level. The control mechanism can be utilised in any configuration of machine described herein.

This mechanism is designed to prevent at least one of two outcomes. It prevents the loading arm from deforming the bale to any substantial extent and/or it prevents excess pressure in a loading arm thus preventing damage to the loading arm and/or a system for moving it.

For example the control mechanism may comprise a relief valve, for example a hydraulic pressure relief valve.

As above it is desirable that the bale loading arm is moveable from an open position where it can extend out from one side of the machine and pass over the top of a bale that is an offset position relative to the machine and engage the bale from a far side thereof and then retract to a closed position to move the bale to a position on the machine where it can be wrapped.

For example the pre-determined level may be exceeded if the loading arm is operated in a position relative to the bale in which it traps the bale against the ground. This may occur when the arm is opened out to a loading position above a bale and where it engages on the top of the bale.

As it above suitably the bale loading arm carries at least one roller and the roller is rotated while the control mechanism is actuated. For example if the arm is pushing down on the top of the bale the control mechanism prevents the arm from exerting more than a predefined pressure on the bale. Also at the same time the roller can be actuated to rotate thus urging the bale out from under the arm. This will reduce the pressure experienced by the arm and the control mechanism will typically then be deactivated again when the pressure returns to or below the pre-determined level.

In this way the control mechanism maintains a pressure in the loading arm that is sufficient for moving a bale toward the loading position, and optionally the rotation of a roller to urge the bale to move can continue, typically simultaneously.

Also disclosed is a chassis for a wrapping machine, the chassis comprising a main chassis member which has an upper substantially horizontal portion upon which to mount a wrapping arm that is driven via a transmitting gear and wherein the upper substantially horizontal portion is provided with at least two distinct mounting positions for a driven gear for driving rotation of the wrapping arm by meshing with the transmitting gear; one distinct mounting position being spaced from the mounting of the transmitting gear to allow to a first gearing ratio and another distinct mounting position being spaced from the mounting of the transmitting gear to allow to a second gearing ratio. The two distinct mounting positions can be utilised in any configuration of machine described herein.

This means that the same motor can be utilised to provide different rotational wrapping speeds. In particular this is a simple construction that does not require a change of the transmitting gear. In some embodiments the transmitting gear is part of a mount for one or more wrapping arms and this allows for different gearing without the need to change the transmitting gear. For example the first and second mounting positions may be arranged relative to the transmitting gear for respectively mounting larger and smaller driven gears. In particular the straight line distance between the axis of rotation of the driven gear and the axis of rotation of the transmitting gear is different as between the two distinct mounting positions.

The transmitting gear may be a slew ring. Desirably one, two or three wrapping arms are associated with the slew ring and when the slew ring is driven for rotation so too are the wrapping arm(s).

Also disclosed is a bale wrapping machine which applies successive overlying wraps of wrapping material, the bale wrapping machine comprising:
a wrapping mechanism for applying wrapping material to a bale;
a bale supporting arrangement; and
at least one roller forming part of the bale supporting arrangement and for rotating the bale during wrapping thereof wherein said at least one roller has an end with an enlarged head to prevent a bale from moving off the end of the roller during wrapping thereof. A roller with an enlarged head can be utilised in any configuration of machine described herein.

This is an important aspect because bales that should be of a particular shape can often be misshaped. For example they may be flat, may be inconsistent in diameter along their length of otherwise misformed. Misformed bales in particular are inclined to move along as they are rotated, as the rotation force imparted to the bale, imparts a translational force to the bale. Such a bale is likely to move along one or more rollers on which it is placed for rotation during wrapping. In a worst case scenario the bale falls off during wrapping, but even if it doesn't fall off it moves away from a centre position and thus may cause overstretching or breaking of the wrapping material because the force required to wrap it in an off-centre position increases.

The roller with the enlarged head may be a driven roller. Indeed a pair of driven rollers with an enlarged head may be provided as the bale support mechanism. As above one of those rollers may be on a lifting arm. In a simple construction the enlarged head is desirably integrally formed as part of the roller.

Desirably the enlarged head is formed by a flared end of the roller or a stepped end of the roller, for example the enlarged head may be formed by a substantially conical end of the roller.

A bale wrapping machine may be provided with at least two rollers that form part of the bale supporting arrangement and are for rotating the bale during wrapping thereof wherein said at least two rollers each have an end with an enlarged head to prevent a bale from moving off the end of the roller during wrapping thereof.

A bale wrapping machine which applies successive overlying wraps of wrapping material, the bale wrapping machine comprising:
a mounting for a three point linkage of a tractor;
a wrapping mechanism for applying wrapping material to a bale;
a bale supporting arrangement; and
one or more ground engaging members, for example one or more rollers or wheels or combinations thereof; that allow the weight of the machine, and any bale on it, to be at least partially transmitted to the ground via the ground engaging members when mounted on a three-point linkage of a tractor and during operational travel of the machine. The ground engaging members can be utilised in any configuration of machine described herein.

This is an important aspect of the invention. A wrapping machine together with a bale that is mounted thereon for wrapping thereof can be a considerable weight for any tractor to bear (on its three point linkage). Providing the ground engaging members which can support the machine during wrapping operation of the machine and as it is moved during wrapping, substantially reduces the amount of weight that would otherwise be applied to the three point linkage of a tractor. Accordingly, a machine of this construction is advantageous because a tractor with a lesser capacity to lift heavier weights can be utilised as compared to a machine that requires the three point linkage to hold it off the ground during wrapping operation/travel. The bale supporting arrangement described herein is applicable to all wrapping machines described herein.

Also disclosed is a bale wrapping machine which applies successive overlying wraps of wrapping material, the bale wrapping machine comprising:
a wrapping mechanism for applying wrapping material to a bale;
a bale supporting arrangement; and
at least one step up member that is positioned below the bale supporting arrangement and is for raising the bale to a partially raised position at a stage intermediate to a wrapping position on the bale supporting arrangement and the ground. The step up member can be utilised in any configuration of machine described herein.

One of the issues that arises, in particular with a lifting arm configuration of the invention, is that the force required to lift a bale of the ground can be quite considerable. Providing the step up member considerably reduces the amount of force that is required because less effort is required to have the bale progress onto the step up member, and once on the step up member, the step up member provides support for the weight of the bale thus reducing the effort required to move the bale further towards the bale supporting part of the machine. For example, in the case of a cylindrical bale, the step up member will provide a raised support onto which the bale can be moved, for example pushed, such as with a loading arm.

In one simple arrangement the step up member is a fixed bumper against which the bale abuts to raise the bale to the partially raised position when the bale is moved against the bumper.

If desired, two step up members may be provided, each for raising the bale to respective spaced apart partially raised positions, each at a respective stage intermediate to a wrapping position on the bale supporting arrangement and the ground during loading thereof. The step up members may be together, but acting as different steps in raising the bale during loading thereof.

The step up member(s) will be in any form that is suitable for allowing the bale to be raised towards the wrapping position. For example the step up member(s) may be in the form of an inclined surface such a ramp surface.

In one particularly desirable construction the step up member(s) also act as step down members for lowering the bale to a partially lowered position at a stage intermediate to a wrapping position on the bale supporting arrangement and the ground during unloading thereof. Again, this may be achieved by a loading arm.

The step up member(s) also acts as an end tip member to assist in tipping a wrapped bale over on its end during unloading thereof. For example the step up member may hold one end of a bale in a raised position while the remainder of the bale is lowered towards the ground thus causing a tilting of the bale. In this position, the wrapping machine can be moved (for example backwards) to push the bale over on its end from the tilted position. In this way the bale can be moved through 90°. For example, in the case of a cylindrical bale, the bale may be tipped over on its flat end. This can be advantageous as it stops the bale from rolling away for example if the bale is unloaded on an inclined surface. A step up member may be utilised in conjunction with any configuration of machine described herein.

Where a kit of parts is provided so that a machine suitable for wrapping bales that is adapted to be mounted directly on a tractor (for example a three point linkage) is (easily) convertible into a trailed machine and desirably an offset trailed machine one or more step up members may be provided on a ground engaging part, for example a part that has at least one wheel. Desirably then any step up member(s) move together with the wheel in arrangements where there is a (width) adjustable wheel. Also disclosed is a bale wrapping machine which applies successive overlying wraps of wrapping material, the bale wrapping machine comprising:
a wrapping mechanism for applying wrapping material to a bale; a bale supporting arrangement; and at least one roller having a forward end and a rearward end forming part of the bale supporting arrangement and for rotating the bale during wrapping thereof wherein said at least one roller is mounted on the machine so as to be angled upwards from the forward end toward the rearward end at an angle from about 3 degrees to about 10 degrees, such as from about 3 to about 6 degrees for example from about 4 to about 6 degrees such as about 5 degrees relative to a horizontal plane of the machine. This has the advantage of helping to prevent drift of a bale off the end of the rollers. It also helps to improve the distribution of film on the bale. For example with increased speed of turning of the bale it is more difficult to get the wrapping material e.g. film to pass across the centre of the bale at the back due to the increased speed at which the bale is turning. The angled roller(s) can be utilised in any configuration of machine described herein. As an alternative, or in addition, the axis of rotation of the wrapping arms could be tilted from being perpendicular relative to a horizontal plane of the mechanism for rotating the bale during wrapping by a similar angle. Or both could be done to achieve a similar relative angle. The angled axis of rotation and/or roller(s) can be utilised in any configuration of machine described herein.

It will be appreciated that all the foregoing and all of the features of the embodiments herein and including various aspects of the present invention can be combined in any desired manner.

### Brief Description of the Drawings

Embodiments of the invention will be described, by way of example only, with reference to the accompanying drawings in which:
**Figure 1** is a side perspective view of a chassis of a wrapping machine of the invention with a main chassis member;
**Figure 2** is a side perspective view of a chassis of Figure 1 with rollers attached that form part of a bale supporting arrangement;
**Figure 3** shows a simplified rear elevational view of a bale wrapping machine of the invention of the type having a chassis shown in earlier figures mounted to the rear of a tractor;
**Figure 4** shows a perspective view of a configuration of a machine of a type shown in **Figure 3****;**
**Figure 5** shows simplified rear elevational view of the configuration of the machine part way through the operation of a loading arm;
**Figure 6** shows a perspective view of a stage in the loading process where a bale is loaded on the machine;
**Figure 7** shows a top plan, part sectional view of a machine in a wrapping configuration;
**Figure 8** shows a top plan view of a machine in an unloading configuration;
**Figure 9** shows a side elevational view of a cut and hold device in an open (extended) position;
**Figure 10** shows a rear perspective view of the cut and hold device;
**Figure 11** shows a closed position of the cut and hold device corresponding to **Figure 9****;**
**Figure 12** shows a closed position of the cut and hold device corresponding to **Figure 10****;**
**Figure 13** shows a front elevational view of an alternative construction of cut and hold device in a closed position;
**Figure 14** shows a front elevational view of the cut and hold device of **Figure 13** in an open position;
**Figure 15** shows a simplified rear perspective view of a bale wrapping machine of the invention of the type having a chassis shown in earlier figures and adapted for loading and wrapping of rectangular bales;
**Figure 16** shows a simplified rear elevational view of a bale wrapping machine of the invention with an alternative loading arm;
**Figure 17** shows a rear perspective view of a machine of the invention with a curved end tip barrier or buffer;
**Figure 18** shows a perspective view of a second part of a bale wrapping machine of the invention that is provided in two parts;
**Figure 19** shows a perspective view of a first and second part of a bale wrapping machine of the invention coupled together;
**Figure 20** shows a simplified rear elevational view of a bale wrapping machine of the invention with an alternative construction;
**Figure 21** shows a front view of the of the machine of Figure 20;
**Figure 22** shows a simplified rear elevational view of a bale wrapping machine of the invention with an alternative construction;
**Figure 23** shows a simplified view from underneath of a part of a bale wrapping machine of the invention;
**Figure 24** shows a perspective view of a kit of parts for converting a machine suitable for wrapping bales that is adapted to be mounted directly on a tractor (for example a three point linkage) into an (offset) trailed machine;
**Figure 25** is an underneath perspective view, of the kit of parts of Figure 24 mounted to a machine of the invention to form a trailed machine;
**Figure 26** is a front perspective view, of the machine of Figure 24 in a compact configuration;
**Figure 27** is a front perspective view, of the machine of Figure 24 in an extended (working) configuration;
**Figure 28** is a side perspective view, of the machine of Figure 24 in use for wrapping a bale;
**Figure 29** is a side perspective view, of the machine of Figure 24 in use unloading a wrapped bale; and
**Figure 30** is a perspective view of an alternative ground engaging arrangement for use with a kit of parts of a type shown in Figure 24.

### Detailed Description of the Drawings

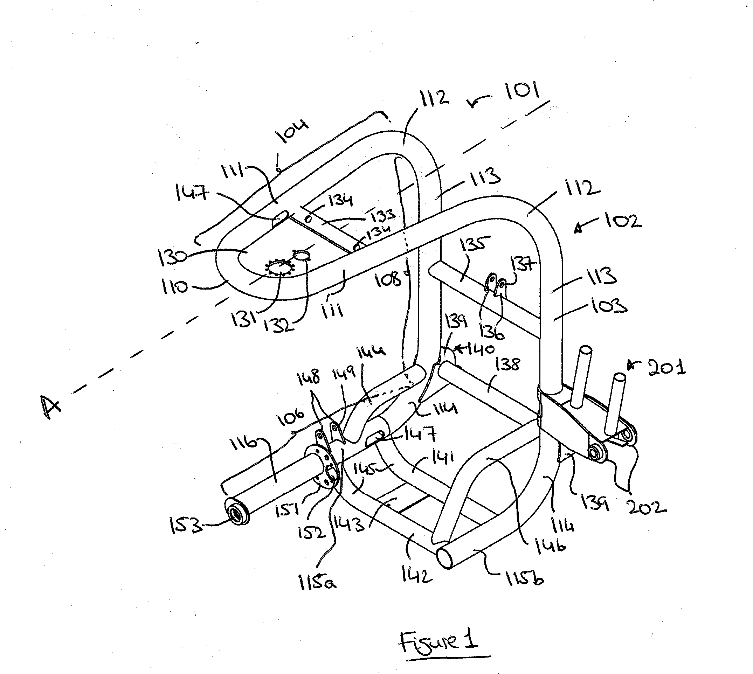

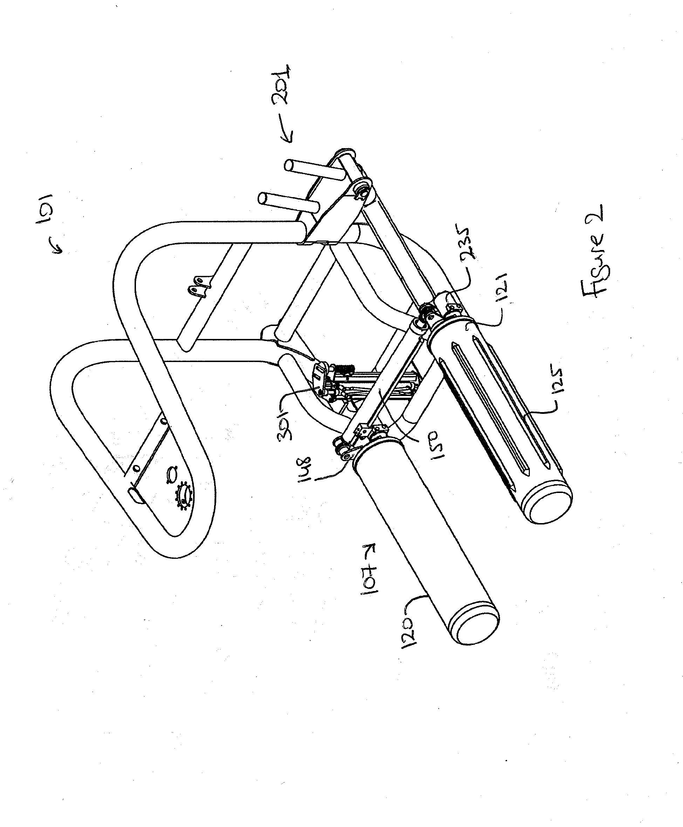

With reference to **Figures 1** **and** **2** there is illustrated a chassis 102 for a wrapping machine 101 (the complete wrapping machine is best seen in later figures), the chassis comprising a main chassis member 103 which has an upper substantially horizontal portion 104 upon which to mount a wrapping arm 105 (seen in later figures). The chassis 102 has a lower substantially horizontal portion 106 upon which to mount at least part of a bale supporting arrangement 107. The upper portion 104 substantially overlies the lower portion 106. Both face in a rearward direction in the orientation shown in **Figures 1** **and** **2****.** A substantially upright portion 108 joins the upper portion 104 to the lower portion 106.

The main chassis member 103 is a unitary member that forms the upper substantially horizontal portion 104, the lower substantially horizontal portion 106 and the substantially upright portion 108. In this respect "unitary" means that the main chassis member 103 is constructed as a single piece. In this respect there is structural integrity (the whole way) from the lower part of the machine to the upper part of the machine.

The main chassis member 103 may be formed by taking a single length of material and working it, for example bending it, to the desired shape. It could be formed, for example cast, in the desired shape. Less desirably, the main chassis member can be made of pieces that are permanently attached to each other, such as by welding. For the purposes of simplicity of construction, it is desirable that welding is not utilised to form the unitary chassis member. Separate parts that are held together, such as by bolts, do not form a unitary main chassis member chassis within the meaning of the present invention.

The substantially upright portion 108 and the upper substantially horizontal portion 104 together are often referred to as a "tower" or "mast" arrangement.

As shown, it is desirable that the main chassis member 103 forms two spaced apart parts which follow substantially similar paths. Indeed as shown, the main chassis member 103 is substantially symmetrical about a vertical plane running through median line A.

In the upper chassis portion 104, chassis member 103 turns back along itself forming a bend 110 and then forms two substantially straight arms 111. (Bend 110 and arms 111 together form an upper substantially horizontal portion 104.) These arms 111 diverge somewhat in the upper portion 104. It then turns downwards through (respective) bends 112 and forms two spaced apart but substantially parallel uprights 113. (Uprights 113 form the substantially upright portion 108.) At each of the lower part of uprights 113 the main chassis member 103 then turns through (respective) bends 114 back to a position underneath the upper portion 104 to form the lower horizontal arms 115a and 115b. (Arms 115a and 115b together form a lower substantially horizontal portion 106.) Arm 115a is longer than arm 115b as arm 115a forms an axle 116 for a roller 120, whereas a second roller 121 is carried by a loading arm 201 as will be described in more detail below.

In the past the lower part of the wrapping machine forming a base or lower chassis part, had separately bolted thereto a tower frame part. By combining both the tower and lower chassis frames into one novel integral part in the form of main chassis member 103, the weight and component parts are significantly reduced. At the same time the structural strength and rigidity of the (chassis of the) machine is increased.

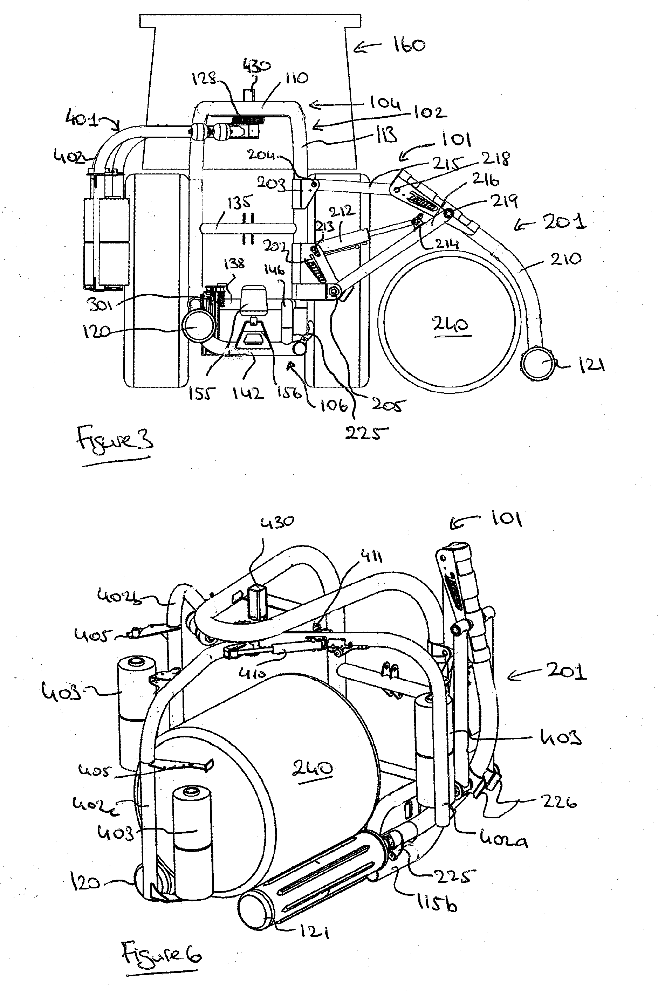

For further structural integrity and/or to form mounts, some cross members are provided which join opposite sides of the chassis 102. Such cross members are desirably welded into place but may be bolted in place. A mounting plate 130 is provided in the upper portion 104 and is joined to bend 110 and part of arms 111 so as to provide a central mount in the upper portion 104. An aperture 131 in the plate 130 forms a mount, for example for a slew ring mount 128 (see **Figure** 3), for rotational support of one or more wrapping arms 402 (see later figures). A second aperture 132 forms a mount for a drive motor 430 (again see later figures) for driving rotation of the wrapping arms.

A further reinforcing cross member 133 is also provided which has apertures 134 that may also be utilised as a mount.

A cross member 135 is provided between the uprights 113. On that cross member 133 are a pair of brackets 136 which have apertures 137 defined therein. The brackets 136 form part of a three point linkage arrangement, for example a pin can be inserted through apertures 137 to engage a top link from a tractor to the machine.

A cross member 138 is provided between the uprights 113 at a point proximate bends 114. At each end of that cross member 138 are respective pairs of brackets 139 which have apertures 1140 defined therein. The brackets 136 form part of a three point linkage arrangement, for example a pin can be inserted through apertures 140 to engage respective lift arms from a tractor to the machine.

The chassis 102 can thus be mounted directly to the three point linkage of a tractor. In particular, at least two of the mounting points for a three point linkage are provided directly on the main chassis member 103.

Two further cross-members 141 and 142 join the lower arms 115a and 115b. Each has a bend 145 formed therein and thus each cross member forms a reinforcing elbow piece between the arms 115a and 115b. This reinforces the lower portion 106 and it is of sufficient strength to carry bale supports and associated mechanisms. A further reinforcing plate 143 extends between the cross pieces 141, 142.

For further structural integrity, a reinforcing elbow piece 144 extends between an upright 113 and the lower arm 115a. A second reinforcing elbow piece 146 is provided on the opposite side of the chassis 102. In this case however, it is not directly connected to the upright 113 and the lower arm 115b. Instead, to allow room for a loading arm, it extends between the cross member 138 and the cross member 142. It does so proximate the main chassis member 103, thus providing structural support for it.

Apertures 147 may be provided in the main chassis member to accommodate lines such as wiring/pipes etc.

A pair of spaced apart brackets 148 with apertures 149 form a mount for a hydraulic ram 150 (see **Figure** 2).

On the part of the arm 115a that forms an axle 116, there is provided a circular bearing plate 151 on which a roller 120 can be mounted. It will be noted that the bearing plate 151 is mounted off centre. This is to accommodate a drive motor. In particular, a drive motor for the roller 120 may be mounted through aperture 152 in the bearing plate 151. A further bearing support mount 153 may be provided at the end of the axle 116.

It will be appreciated that as the axle 116 is part of the arm 115a, the axle 116 is not movable relative to the chassis 102. This means that the roller 120 is fixed. So while it can rotate, and be driven for rotation, it cannot move relative to the chassis 102.

The chassis 102 in particular the main chassis member 103, and more particularly and upright 113 thereof, also provides a suitable structural support for a loading arm 201 (as described below). For the purposes of illustration, a truncated illustration of the loading arm 201 has been included. However, **Figures 1** **and** **2** show a pair of lower supporting brackets 202 which are mounted directly to an upright 113. These brackets can support the loading arm in a manner as will be described in more detail below.

It will be appreciated that while the present invention shows a loading arm 201 being attached to one side of the machine 101, it is possible to provide a machine of the invention with the loading arm on the opposite side or indeed with dual loading arms. In such a case, instead of the roller 120 being mounted on the arm 115a, the arm 115a would be shorter/truncated in a manner similar to arm 115b. The loading arm would then carry an axle for the roller 120 and the roller 120 would no longer be fixed relative to the chassis 102. Such a machine would allow a bale to be picked up from the other side of the machine 101. In a case where two loading arms are provided a bale may be loaded from either side of the machine 101.

While the main chassis member 103 may be formed of any suitable material, desirably it is formed by a hollow section material. This will reduce the weight of the main chassis member. It may be formed from box section material. As illustrated, it is desirably formed by a (hollow) tubular member.

As illustrated, the main chassis member is formed from a single piece of material shaped to form the main chassis member. For example, it may be bent into shape. As above, desirably the single piece of material is tubular.

This results in an extremely simple yet highly efficient method of construction of a chassis for a wrapping machine and thus the wrapping machine itself. Furthermore, the machine will have very strong structural properties.

Furthermore, a chassis in the machine of the invention is extremely versatile. It can be utilised in a machine which is mountable on a front or rear three point linkage, a front or rear loader, utilised as a stand-alone or stationary machine, and/or a trailed machine.

It will be appreciated that the two lower arms 115a and 115b may each form an axle. In such an arrangement rollers on those axles will be fixed in position.

In an alternative construction such as is shown in **Figures 1** **and** **2** one roller is fixed in position by virtue of being rotatably mounted on a lower substantially horizontal portion. A second roller is movable, optionally by virtue of being mounted on a loading arm as will be described below.

Thus within the present invention each may be fixed, though desirably one is movable. In particular, it is desirable that there are a pair of opposing rollers. In such an arrangement it is advantageous that the opposing rollers are operable to act as a pick-up mechanism for a bale. For example, at least one may move apart from the other to allow the machine to pick up a bale for wrapping, and then move back to pick up the bale. This may be achieved by having the rollers move apart in a substantially linear (horizontal) manner. In such an arrangement the hydraulic ram 150 may be utilised to move the roller 121 away from the other roller 120. However, the loading arm 201 provides an alternative mechanism for moving one roller away from the other. In such a case, the hydraulic ram 150 can cooperate with the loading arm 201. Together then, the opposing rollers 120,121 form a bale support arrangement 107. A bale loaded onto the machine will be supported by the rollers 120, 121 which form a cradle type arrangement for the bale.

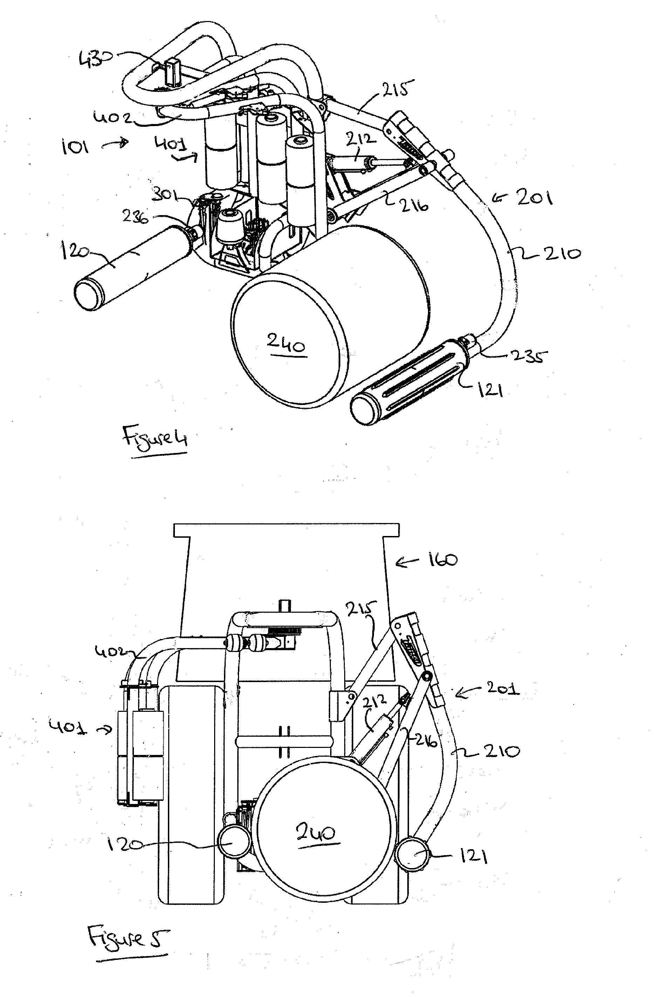

The roller 121 is driven by a drive motor 235. A series of optional ribs 125 are provided on the roller 121 to allow for better grip against a wrapped bale. The roller 120 is also driven. Ribs can be provided on roller 120 also if desired. A motor 236 is provided to do so (see **Figure 4**).

Also shown in **Figure 2****,** and mounted on the chassis 102 in a vertical orientation is a cut and hold device 301. The operation of the cut and hold device 301, will be described in more detail herein. In the embodiment, the cut and hold device 301 is mounted on the plate 143 which extends between the cross members 141 and 142.

**Figure 3** shows a simplified rear elevational view of a bale wrapping machine 101 of the invention mounted to the rear of a tractor 160, and in particular mounted on a (rear) three point linkage thereof. The machine 101 has a chassis 102 which is the same as that illustrated in **Figures 1** **and** **2****.** **Figure 3** shows some additional detail, in particular detail of a loading arm 201. A wrapping mechanism 401 for applying a wrapping to a bale 240 is also shown. It is mounted to the slew ring 128 provided on the upper horizontal portion 104 of the chassis 102. A rotation mechanism for rotating a bale 240 during wrapping thereof takes the form of rollers 120, 121, at least one of which is driven to rotate the bale during wrapping thereof.

A conical roller 155 is provided on the lower portion 106 of the chassis 102. The conical roller provides a rotatable stop that does not interfere with wrapping of the bale but also prevents the bale moving too far forward on the machine. This helps to keep the bale 240 in place for wrapping thereof.

**Figure 3** shows the loading arm can be attached to an upright 113. This is a very simple attachment arrangement and again allows for simplicity of construction while maintaining sufficient strength. **Figure 3** shows the open position of the arm 201. In this position, the arm 201 extends laterally (to one side of the machine 101) and in particular away from the chassis 102. In this open position, and as illustrated, it can pass over the bale 240. The loading arm 201 can then retract to bring the bale 240 into a wrapping position on the machine 101.

As can be seen from **Figure 3****,** in the open position, the arm 201 can pass over the top of a bale 240 that is an offset position relative to the machine and engage the bale 240 from a far side thereof (the side furthest away from the chassis/machine) and then retract to a closed position to move the bale to a position on the chassis/machine where it can be wrapped. This is particularly advantageous because even though the wrapping mechanism 401 of the machine is operational only about a position that is in line with the tractor 160 and thus directly to the rear thereof, an operator can drive forward to position the machine 101 so as to pick up a bale. In prior art machines an operator may have had to reverse the tractor 160 into the bale so that it could be picked up.

It is clear from the illustration that the loading arm 201 swings outwardly and upwardly to open in the manner of a gull-wing arm. Also the arm 201 swings downwardly and inwardly to close in the manner of a gull-wing arm.

The arm 201 has a first portion that is substantially a bent L-shape where the upper limb of the L-shape is bent to curve outwards and downwards (relative to the chassis 102). The bottom limb of the L-shape forms an axle for the roller 121. (In a later embodiment described below the upper limb of the L-shape is substantially straight.) In an open position of the arm 201, the L-shaped portion has a first portion that runs in a direction outwardly and away from one side of the machine and has a second portion that follows a path that runs in a direction substantially perpendicular to that of the first portion and substantially parallel to a vertical longitudinal plane of the machine.

To spread the load, the arm 201 is mounted to upper 203 and lower brackets 202 by respective pins 204,205. In particular, and the L-shaped portion 210 of the arm 201, is mounted by upper and lower stay arms 215, 216 respectively. The upper stay arm 215 runs between the bracket 203 and is held by a pin 218 to the L-shaped portion 210. The lower stay arm 216 is connected to the L-shaped portion 210 at a position lower down on the L-shaped arm 210 than the connection point with the upper stay arm 215. It is held in place by a pin 219. The L-shaped portion 210 and the respective linkage arms 215, 216 does act as a bale lifting arm. In particular, a double acting hydraulic cylinder 212 is mounted between the chassis 102 and the lower stay arm 216. In particular, it is mounted on the chassis via bracket 202 by a pin 213. And it is attached to the stay arm 216 by brackets 214 through which a pin 217 has been inserted. Operation of the hydraulic cylinder 212 opens and closes the arm in a manner as will be described in more detail below.

**Figure 4** shows a perspective view of the configuration of the machine 101 similar to the view shown in **Figure 3****.** However, in **Figure 4** the tractor 160 is no longer shown for clarity of illustration. Furthermore, **Figure 4** illustrates the desirable positioning of the wrapping arms 402 during loading of a bale. In this configuration they are positioned on the chassis 102 where they will be behind the bale 240 when it is loaded.

**Figure 5** shows the configuration of the machine part way through the operation of the loading arm 201. Retraction of the arm 201 engages the bale 240 and causes the lower part of the L shaped portion 210 to engage against the bale. In particular, the roller 121 engages against the bale. It does so at a position below the centre point of the bale 240. This causes the bale 240 to roll along the ground towards the machine 101. As the roller 121 is carried on the loading arm 201 it engages against the bale, it may be driven for rotation while this occurs, for example in a clockwise direction from the perspective of **Figure 5** to encourage the bale 240 to rotate in an anticlockwise direction back towards the machine.

This motion continues until the bale 240 hits the roller 120. Optionally, the roller 120 is also rotated during this process. This results in the bale 240 reaching the position shown in **Figure 5****.**

**Figure 6** shows a stage in the loading process for the bale 240 is mounted upon and is cradled between the rollers 120 and 121. (Again in **Figure 6** for ease of illustration the tractor 160 is not shown.) This is achieved by continuously moving the arm 201 inwards until the bale reaches this position. One or both of rollers 120 and 121 can be rotated to help lift the bale 240 to the position shown in **Figure 6****.**

The machine 101 of the present invention is provided with a locking mechanism in the form of a locking latch 225 (best seen in **Figure 3**). In the embodiment the locking latch 225 is provided on the lower arm 115b. When the loading arm 201 is closed to the position shown in **Figure 6** the latch 225 holds the arm 201 in the closed position. In particular, it engages and holds the lower part of the L-shaped portion 210. It is a releasable locking mechanism and accordingly, when the machine is actuated to open the arm 201 to pick up the next bale, the latch 225 is opened to allow release of the arm 201. Thereafter, the rollers 120 and 121 co-operate to rotate the bale 240 during wrapping thereof.

It will be appreciated, and as shown in **Figure 6****,** that once the arm 201 is retracted, it is in a very compact configuration against the remainder of the chassis 102. A guide or socket formed by opposing guide plates 226 is provided on the chassis 102 to guide the arm 201 home to its fully closed position.

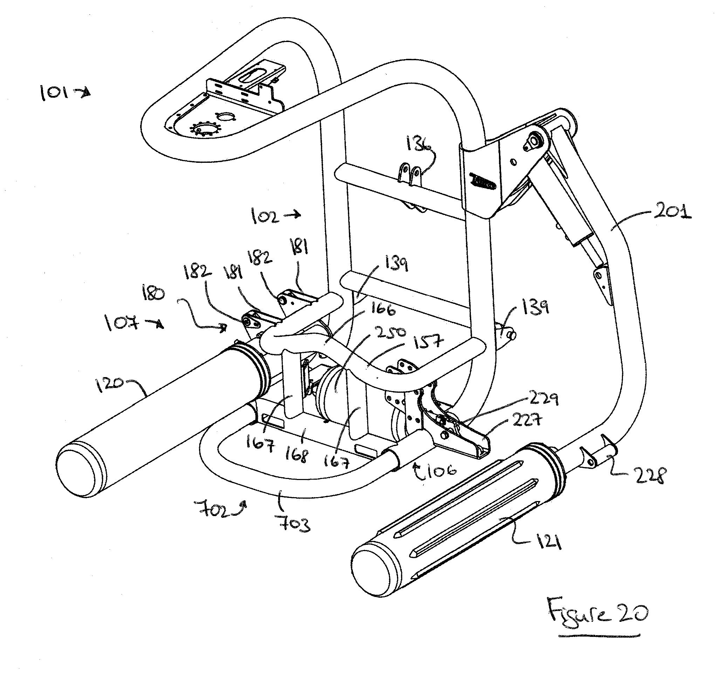

In an alternative arrangement best seen in **Figure 20** the locking mechanism is shown with another construction. In **Figure 20** a roller 228 on the loading arm 201 is aligned to mate with a receiver in the form of a channel section 227. As the arm 201 moves towards the closed position, the roller 228 meets with and mates with the channel section 227 rolling along it. This meeting of the roller 228 and the channel section 227 provides support for the loading arm 201 (during the last part of the closing action). A latch hook 229 is provided within the channel 227. As the roller 228 moves along, it trips the latch hook 229 (for example over centre) and is then caught by the latch hook 229.

A ram, preferably a hydraulic ram, is desirably actuated when the latch hook has latched the roller 228. This ram then assists in the movement of the loading arm 201 to its fully closed position for wrapping. It also holds the latch and thus the loading arm 201 during the wrapping cycle. This provides the desired stability of the loading arm 201 as the bale is wrapped. Once it is desired to unload a bale, the latch 229 is opened by actuation of the ram.

It is appreciated again that this is a very simple construction because the loading arm and the roller it carries both form part of a loading mechanism and both form part of a mechanism for (supporting and) rotating the bale during wrapping.

If desired, a reinforcing elbow piece can be added to reinforce the loading arm, in particular reinforced the L-shaped portion 210 thereof. For example an elbow portion could run between the upper portion and the transverse lower portion.

If desired, a machine 101 may be provided with an adjustment mechanism to increase the height to which the arm 201 opens. For example, a tilting mechanism could be provided to increase the height to which the arm 201 opens. That tilting mechanism could be a tilting relative to the chassis 102. Alternatively, it could be a mechanism for tilting the entire chassis 102. In one arrangement, the tilting mechanism is provided on the tractor which drives the machine. For example, it could be a mechanism that raises one lift arm of the tractor relative to another. Desirably this is done by a hydraulic cylinder.

Additionally, or alternatively, the adjustment mechanism may articulate two parts of the arm relative to each other to increase the height to which the arm opens.

This adjustment will of course be reversible, because once the loading arm has passed over a bale, it will be desirable to lower it so that the lower part of the arm is at least below the centre of a bale to be loaded.

For example the adjustment mechanism may also articulate two parts of the arm relative to each other to reduce the height at which the arm closes.

Desirably, for use with rectangular (including square) bales the lifting arm 201 may further comprise a lifting mechanism to lift the bale off the ground so that it is held off the ground by the arm. Such an arrangement will be described in more detail below.

It will be noted that the main pivoting of the arm 201 is about pivot pin 219 which, in use, is above a bale to be loaded. Indeed, as shown, the loading arm 201 may be pivotally mounted at at least two points. The bale loading arm 201 comprises at least two portions that are articulated relative to each other and in the embodiment comprised three portions that articulate relative to each other, those are link arms 215 and 216 and L-shaped arm 210.

The main folding action of the arm is a point, which in use, is above a bale being loaded.

The bale wrapping machine 101 of the invention incorporates another aspect of the invention which is the wrapping arm aspect of the invention. It has a bale supporting arrangement formed by the rollers 120 and 121, and it has cut and hold mechanism 301 which will be described in more detail herein. This aspect of the invention can incorporate the chassis 102 of the earlier figures, and the loading arm of the earlier figures as shown in combination, for example, in **Figure 6****.**

It will be noted that the wrapping mechanism 401 comprises three rotating wrapping arms 402, that, in a repeated working cycle for wrapping successive bales 240, have a first wrapping configuration where they are spaced substantially equally apart (as shown in **Figure 6**), for cooperatively rotationally wrapping a bale with wrapping material, and have a second configuration where, at the start of a wrapping cycle, and at the end of a wrapping cycle, the three working arms 402 may be brought together proximate each other (for example as shown in **Figure 4**) so that respective wrapping material from each arm 402 may be cut and held by one cut and hold mechanism 301. Wrapping action may be driven by drive motor 430.

Each arm has a roll 403 of wrapping material thereon. (A film pre-stretcher 22 may also be utilised on each arm but is not shown here but is shown in later figures, but could be held by brackets 405.) (For ease of illustration and the dispensing of wrapping material is not shown.)

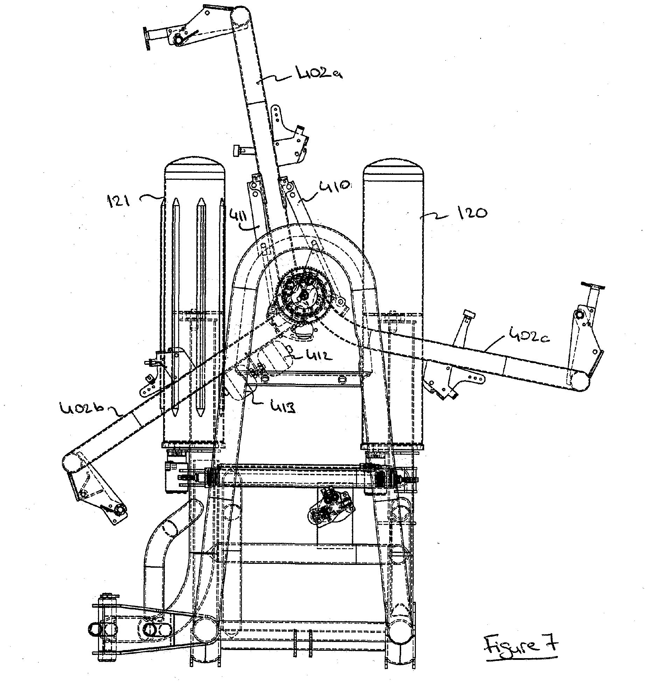

One arm 402a acts as a master or main arm and the other two arms 402b and 402c act as auxiliary or slave arms. This is best seen from the top plan, part sectional view of **Figure 7****.** Hydraulic cylinder 410 connects arm 402a to arm 402c. A second hydraulic cylinder 411 connects arm 402a to arm 402b. Hydraulic accumulators 412, 413 are provided to travel with the rotating mechanism to close the cylinders 410 and 411. A pressurised hydraulic fluid is used to open the arms to a wrapping position.

The wrapping arms 402 are mounted on a common slew ring 128. This provides the mounting bearing for all of the arms and is externally toothed so that it can mesh with a drive gear on the drive motor.

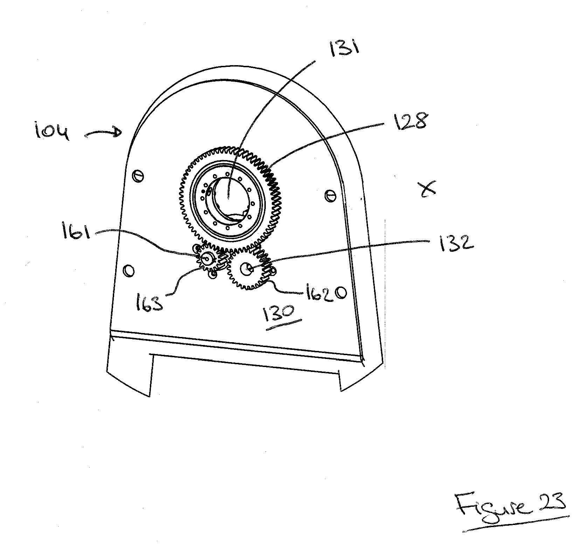

As seen in the partial (underneath) view of **Figure 23** the upper substantially horizontal portion 104 upon which to mount a wrapping arm chassis 101 for a wrapping machine, there is a simple arrangement to allow for different gearing thus different wrapping speeds.

As shown there is a transmitting gear which is the form of slew ring 128. The upper substantially horizontal portion 104 is provided with first 132 and second 161 distinct mounting positions which are shafts/apertures in/on which respective driven gears 162 and 163 are mounted for driving rotation of the wrapping arm by meshing with the slew ring 128. It will be appreciated that the respective driven gears 162 and 163 are of different sizes and thus the gearing ratio between them and the slew ring will be different. In particular, the gear 163 is smaller than the gear 162. Accordingly, the gear 163 will have a lower gear ratio and thus drive the slew ring at a slower speed than the larger gear 162 (when each is rotated at the same speed). (It will be appreciated that only one driven gear will be required for operation of the machine and that the two are shown in the same drawing for the purposes of illustration.)

This means that the same motor 430 (see e.g. **Figures 3-6**) can be utilised to provide different rotational wrapping speeds simply by mounting in a different position and with a differently sized gear driven by the motor 430. This is a simple construction that does not require a change of the transmitting gear (or indeed the motor) in order to achieve different wrapping speeds.

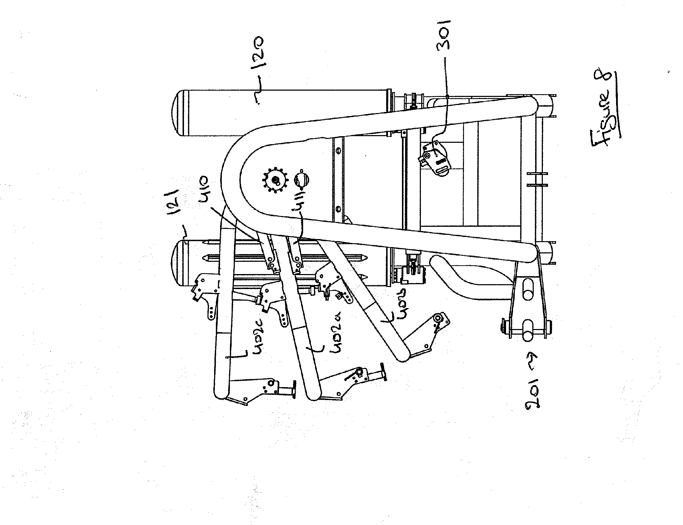

When wrapping is completed, the hydraulic cylinders 410 and 411 are actuated. This brings the three arms 402a, 402b and 402c together to the position shown in the top plan view **Figure 8****.** In this arrangement, all three arms will pull their respective webs of wrapping material across the cut and hold device 301 (which will be extended for the purpose). All three webs of film can then be caught and held by the cut and hold device 301 in one retraction action. Once the wrapping material is caught and held by the cut and hold device 301, the rollers 121 and 120 can be moved apart, for example by actuation of the lifting arm 201 to release the bale down onto the ground.

It will be noted that the cut and hold device 301 is mounted in a fixed substantially vertical orientation, at a position where it is below the wrapping material being applied to the bale. In its closed position it does not therefore interfere with wrapping of the bale.

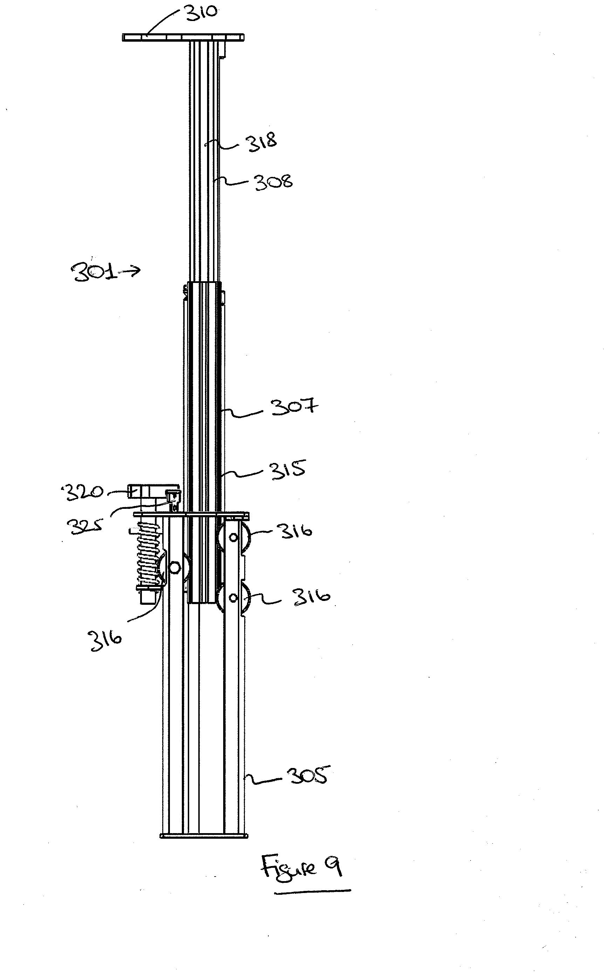

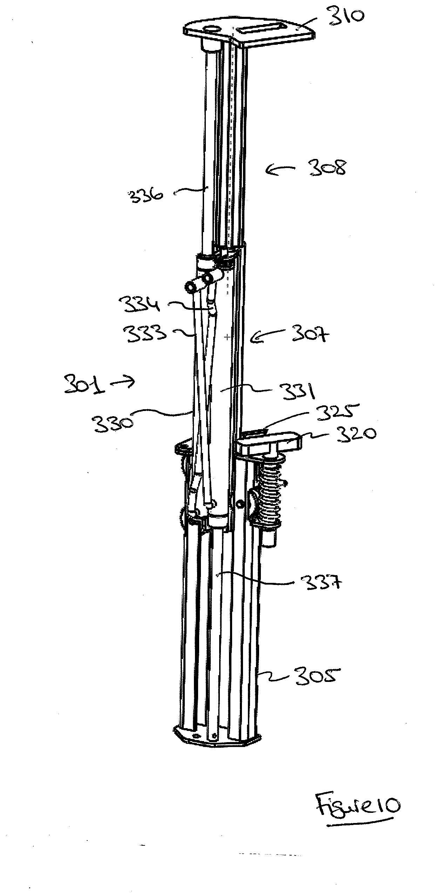

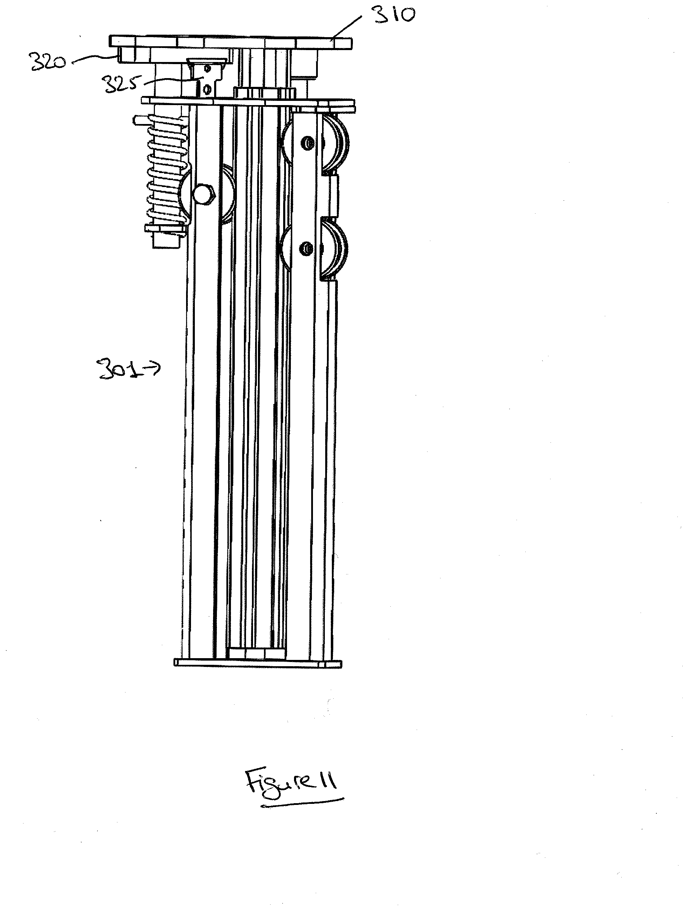

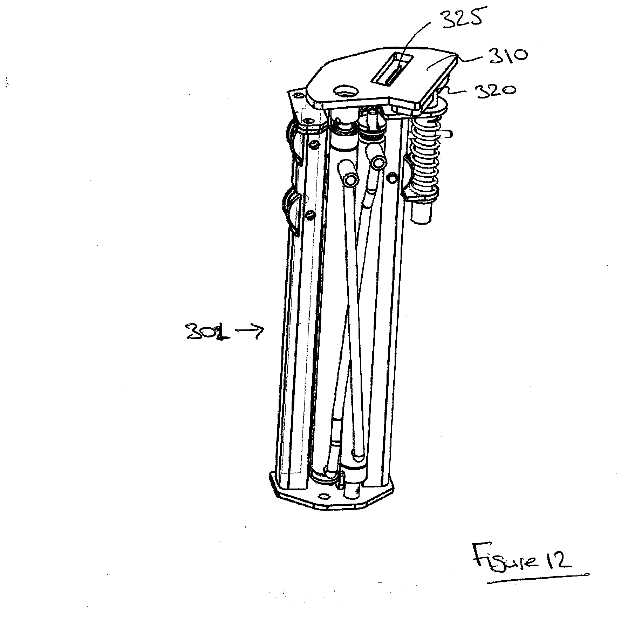

One suitable cut and hold device 301 is shown in an open position and from a side elevational view in **Figure 9** and in an open position and from a rear perspective view in **Figure 10****.** Respective corresponding closed positions are shown in **Figures 11** **and** **12****.** In the closed position it cuts and holds wrapping material. For example, it can be utilised in a machine of the present invention, which in a wrapping configuration has three equally spaced apart wrapping arms and it can catch and then cut and hold three webs of wrapping material that have been dispensed by those wrapping arms.

It will be noted that the device 301 extends in length by an amount substantially greater than its closed length. Its open length is well over twice that of its closed length. In particular, where a hydraulic cylinder is utilised to extend the device 301 to its open position, it is desirable that the device extends in (overall) length by an amount greater than the length of the extending stroke of that cylinder.

It is noted that the cut and hold device 301 is mounted in a substantially vertical orientation.

The device 301 comprises a multistage arrangement to move the mechanism from an open position to a closed position and from the closed position to the open position.

In particular it has an outer fixed frame 305 which is firmly secured to the chassis 102 of the machine 101. The outer fixed frame 305 is thus fixed against movement including rotation.

The device 301 comprises a multistage action when it opens. In particular it has a first sliding frame 307 and a second sliding frame 308. The first sliding frame is extendable from the outer fixed frame 305. The second sliding frame 308 is carried on the first sliding frame 307 and extends from it. Carried at the top of the second sliding frame 308 is a catcher or gripper 310 for catching and pulling the wrapping material downwardly for cutting and holding it.

It will be noted that the device 301 has an anti-torsion mechanism to resist twisting of the cut and hold mechanism in its open position, and indeed as it moves toward the closed position from the open position.

The anti-torsion mechanism comprises a series of splines. In particular sliding frame 307 has a series of external splines. These splines engage within grooved rollers 316 which are mounted on outer fixed frame 305. Desirably three or more rollers each on at least one spline are provided, though each may be provided on different splines. This assists in prevention of torsion of sliding frame 307. Splines 318 on second sliding frame 308 engage within the splines 315 on sliding frame 307 and thus splines 318 help prevent relative rotation of second sliding frame 308 relative to first sliding frame 307.

It is important that this anti-torsion arrangement is provided, because the torsional force that can be experienced by a cut and hold device can be very considerable. The forces are high because three films of wrapping material are caught and then held together. The multiple frames that are slidably mounted in each other maintain a straight path as they extend.

Also provided on the device is a firm grip pad 320 (which is springloaded) and a cutting knife 325.

As best seen from **Figure 10****,** the opening and closing action of the mechanism is provided by a double acting arrangement to move the mechanism from an open position to a closed position and from the closed position to the open position. In particular, two double acting cylinders 330 and 331 are provided. It will be noted and that they are mounted together so that they move together or carry each other. They are also in an inverted relationship relative to each other. So while in the closed position they are substantially coincident with each other, when extended, the extension of their respective pistons 336, 337 are in opposite directions. In the arrangement, the hydraulic cylinder 330 extends upwardly whereas the hydraulic cylinder 331 extends downwardly. Allowing for some overlap with the outer frame, this means that the extension movement can be up to 3 times the length of the closed device. This thus provides a multistage double acting arrangement.

While the cylinders 330 and 331 are separate it will be noted that they are hydraulically interconnected so as to be extendable at the same time. In particular two hydraulic connections 333 and 334 connect corresponding ends of one cylinder with that of the other. This means that even though there is a double acting arrangement on each cylinder where they can both be opened and closed by hydraulic pressure, the interconnection provided allows for both to be opened or closed at the same time using, for example, a single hydraulic fluid source.

This provides a very strong mechanism which is capable of opening and closing device despite strong resistance, for example under pressure from three stretched webs of wrapping material.

The closed position is shown both in **Figures 11** **and** **12****.** When closed, the blade 325 cuts the wrapping material. Furthermore the wrapping material gripper 310 grabs the film and holds it against the film grip pad 320.

The wrapping material is thus held for the next wrapping cycle. Once wrapping has been completed and the wrapping material has become sufficiently self-secured on a bale, the wrapping material is released by the device 301.

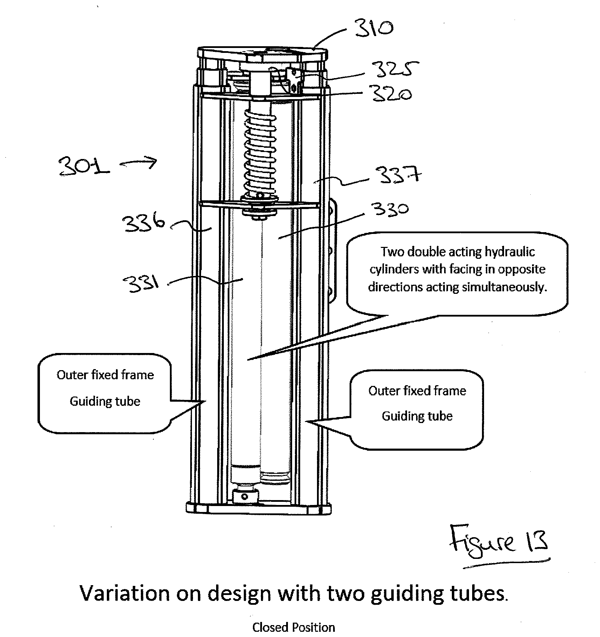

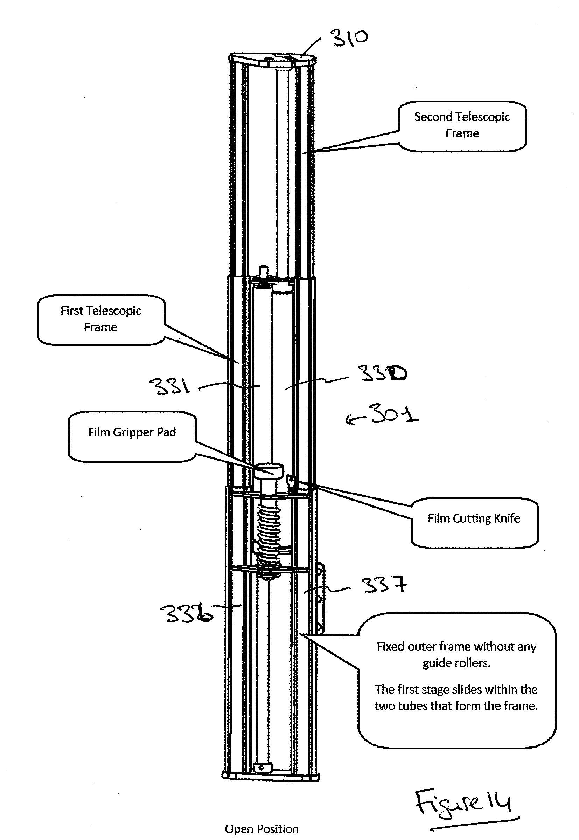

**Figures 13** **and** **14** show an alternative construction of cut and hold device 301. In this case the anti-rotation mechanism is provided by two outer telescopic frames 336, 337. Each of these frames is fixed to the chassis 102 to prevent movement thereof including rotational movement thereof. As the telescopic frames 336, 337 extend they resist torsional forces in a manner similar to the spline/grooved roller arrangement of the earlier figures. Again, the device extends using an inverted double acting cylinder arrangement. Furthermore, it extends in length by an amount greater than its closed length.

While double acting hydraulic cylinders are preferred for use within a cut and hold device 301, it will be appreciated that two single acting hydraulic cylinders can be utilised so that together they form a multistage hydraulic cylinder arrangement to move the mechanism from an open position to a closed position and from the closed position to the open position. For example any cut and hold device described herein may be telescopic.

A cut and hold mechanism 301 may additionally be provided with a self-cleaning mechanism to remove any residue of wrapping material off the cut-and hold mechanism as the cut-and hold mechanism opens or closes or both. For example a scraper may be provided to scrape any residue of wrapping material off the cut-and hold mechanism as the cut-and hold mechanism opens or closes or both.

A cut and hold device 301 may comprise a manual close mechanism adapted to allow an operator to manually place wrapping material in the cut and hold mechanism and manually close the cut and hold mechanism. In order to begin a wrapping cycle the wrapping material must be held within the cut and hold device. Instances occur where the machine runs out of wrapping material or the wrapping material breaks. In such a case it is then necessary to replace the wrapping material in the cut and hold device. In machines where the wrapping cycle is automated, the operator must otherwise return to the automatic controls for the device, which are typically located within the cab of a tractor, in order to close the device. By that time the wrapping material may have come loose again from the cut and start device. The local, manual release device, provided on the machine, allows an operator to hold the film in a suitable position with one hand and operate the mechanism with the other.

A further aspect is a cut and hold mechanism for a bale wrapping machine for cutting and holding wrapping material which is applied by the machine, the cut and hold mechanism comprising a self-cleaning mechanism to remove any residue of wrapping material off the cut-and hold mechanism as the cut-and hold mechanism opens or closes or both, for example a scraper, to scrape any residue of wrapping material off the cut-and hold mechanism as the cut-and hold mechanism opens or closes or both.

A further aspect is a cut and hold mechanism for a bale wrapping machine for cutting and holding wrapping material which is applied by the machine, the cut and hold mechanism comprising a wrapping material engaging portion that has at least two projections with a recess therebetween so that wrapping material held against the cut and hold mechanism abuts the projections and spans across the recess. For example the wrapping material engaging portion may have projections in the form of a series of at least three splines.

The present invention also provides a bale wrapping machine wherein the cut and hold mechanism is mounted at a position where it is below the wrapping material being applied to the bale, and has an operational cycle with
(i) a wrapping material engaging step where it extends substantially vertically upwardly to catch the wrapping material from all three wrapping arms;
(ii) a cut and hold step where it retracts substantially vertically downwardly to cut and hold the wrapping material thus allowing release of a bale that has been wrapped and holding the material for the next wrapping cycle; and
(iii) a wrapping start step where the wrapping material is released after the wrapping material has been sufficiently wrapped on itself to hold itself on the bale.

In order to compensate for the loss/non-dispensing of wrapping materials from one or more wrapping arms the machine of the invention may further comprise an automated control that automatically relatively adjusts the rotation of the bale and the speed of wrapping arm movement so that the machine can operate whether one, two or all three wrapping arms are applying wrapping material.

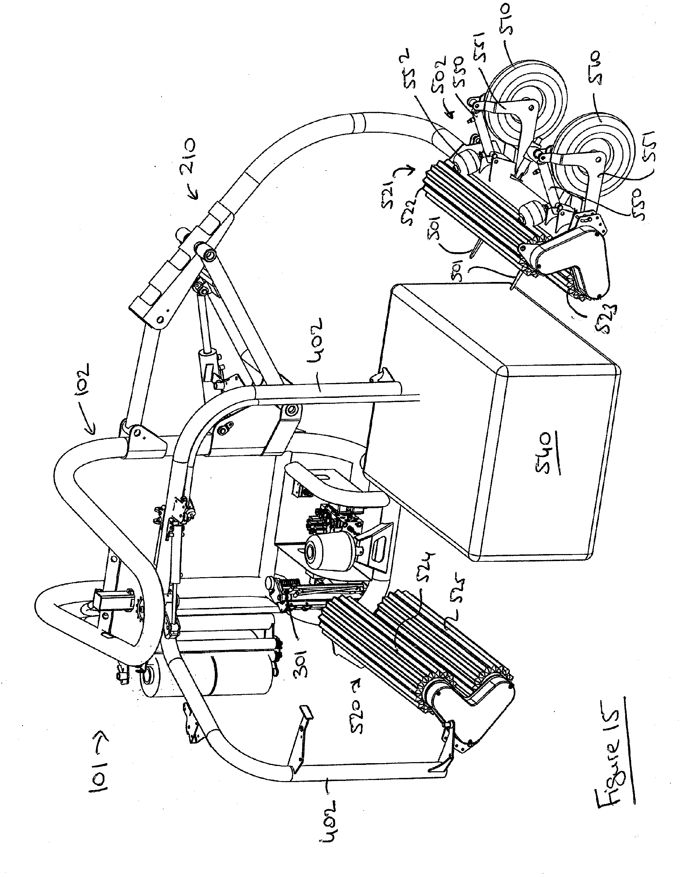

A further aspect of the present invention is a bale lifting mechanism such as shown in the machine 101 of **Figure 15****.** The machine 101 is identical in material respects with earlier machines and has a similar chassis 102, a similar wrapping mechanism comprising wrapping arms 402, and a similar lifting arm 210.

The main difference between the machine 101 of **Figure 15** and earlier embodiments of the machine is that this machine is specifically adapted to handle rectangular (including square) bales. The bale wrapping machine 101 is adapted to apply successive overlying wraps of wrapping material. The bale wrapping machine comprises:
(i) a wrapping mechanism for applying wrapping material to a bale;
(ii) a bale supporting arrangement; and
(iii) a bale lifting mechanism for lifting a bale off the ground,
wherein the bale lifting mechanism comprises:
at least one lifting tine projecting from a loading arm wherein the lifting tine is arranged to engage underneath or engage within the bale and to tilt upwards to lift the bale sufficiently to allow a roller on the loading arm engage underneath the bale.

In particular, it will be noticed that the lower end of the loading arm 210 now carries a different arrangement. In particular the arm 210 includes a bale lifting mechanism 502. The mechanism includes two tines 501. In this respect the expression "tines" is any suitable pointed element that can penetrate the bales and any number can be used. Desirably there are at least two. The loading arm 210 moves the tines 501 until they engage under or in a rectangular bale 540. At that stage a roller mechanism 521 also engages a side of the bale 540. They are after, the bale lifting mechanism 502 rotates in a clockwise direction (as viewed from the perspective of **Figure 15**). This lifts the bale clear off the ground, and allows it to be carried in towards the roller arrangement 520. The arm 210 then locks in place in a manner similar to that described above, and the roller mechanisms 520 and 521 cradle the bale and can rotate the bale 540 for wrapping thereof. Wrapping is carried out by arms 402 (which typically in the loading position would be behind the bale as described above).

The roller mechanism 521 comprises two opposing rollers 522 and 523 and the roller mechanism 520 comprises two opposing rollers 524 and 525. These pairs of opposing rollers are sometimes referred to as twin rollers or even "rock and roll" rollers because of the way they are moved or oscillate when a rectangular bale is rotated by them.

To the extent that it is not possible to use a drive motor to move those rollers then it may be possible to use a reciprocation action, such as a reciprocation of a hydraulic cylinder open and closing action to effect the movement.

It will be noted that the lifting mechanism 502 is supported by at least one ground-engaging support. In particular, in the embodiment the ground engaging support is provided by a pair of wheels 510. The wheels may bear a substantial part of the weight when the bale 540 is lifted by the lifting mechanism 502.

Indeed, the rotational force required to lift the bale, may be taken up by the wheels 510. For example, as shown, they may be provided with hydraulic cylinders to allow them to exert force on the remainder of the mechanism via brackets 551 which mount them to the remainder of the mechanism. Accumulators 552 are provided to provide additional force to maintain the cylinders in a desired position but allowing some for some movement of the cylinder in response to external forces such as shocks from bumps etc. In this way the accumulators act to an extent in the manner of a compression spring.

Additionally, or alternatively, the ground engaging support may comprise at least one height adjustable and/or swivel wheel, for example a jockey wheel. If desired one or more endless belts mounted about the twin rollers and adapted to cradle a bale for wrapping thereof.

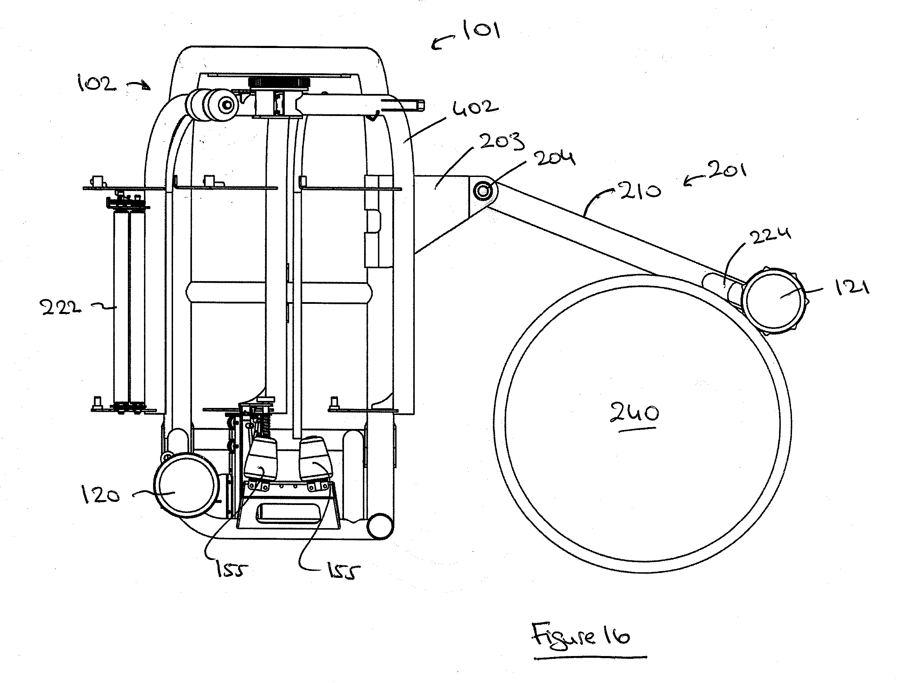

Another version of the loading arm 201 is shown in **Figure 16****.** As can be seen from **Figure 16****,** the loading arm 201 is a simple L-shaped arm 210. It is mounted with a single mounting point 203 using a pin 204. It can be moved between the open position as shown in **Figure 16** to a closed position similar to that described previously where the bale 240 is then loaded on the machine 101 and is mounted for rotation on rollers 121 and 120. As with previous embodiments, the roller 121 which is typically driven is carried on the loading arm 210. It will be noted that in this case, the loading arm 210 engages the bale 240 at a position higher up. In particular, it engages the bale and a position above its midpoint. It can be moved between its open and closed position by a hydraulic cylinder (not shown). An elbow piece 224 extends between the upper limb of the L-shaped arm and the lower limb of the L-shaped arm for reinforcement. The loading arm 210 may also be locked in place in a manner as described above.

There are some other minor variations as compared to earlier constructions of the machine. Included are a pre-stretcher 222 which is used for a prestretching the firm before it is applied. It also includes two conical rollers 155 to prevent the bale moving too far backwards on the machine.

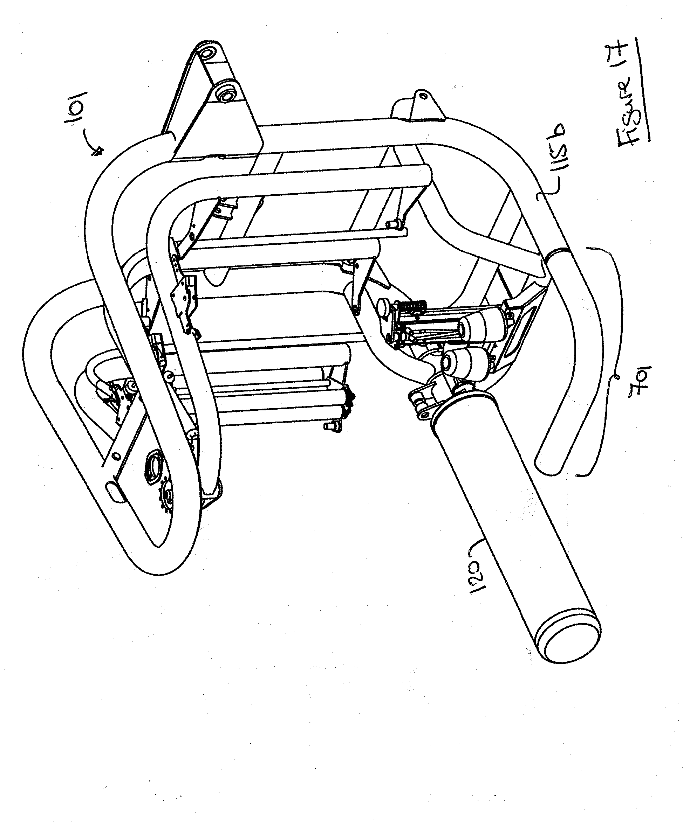

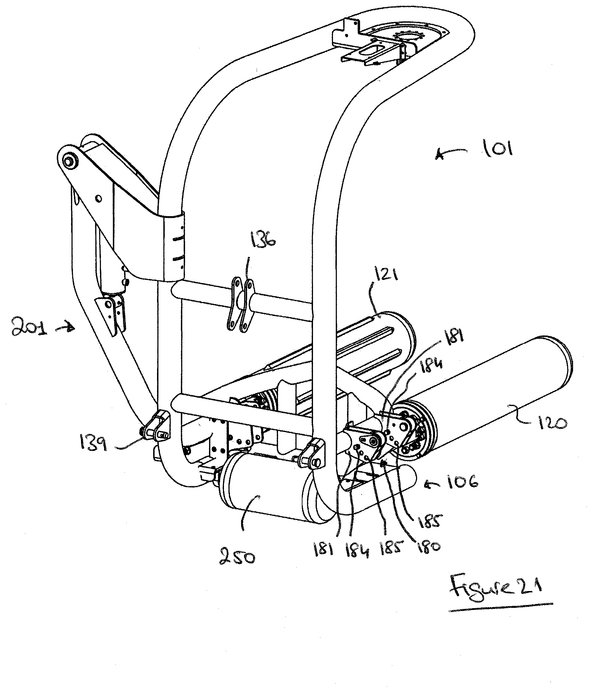

**Figure 17** shows a machine 101 which is substantially similar in construction to previous embodiments described. A curved end tip barrier or buffer 701 has been provided on the arm 115b. As can be seen, it is a simple piece that extends along in the direction of the arm 115b and then turns inwardly. Its function is simple. When rollers 120 (and 121-not shown) are moved apart to unload a bale, the bale will move down and bump against the buffer 701 with the result that the bale then be urged to move away, for example roll away from the machine. Such a buffer arm that is desirably integral with the chassis forms a further aspect. It can be used with all the embodiments of the present invention including those embodiments adapted for handling rectangular bales. It will be appreciated that the buffer 701 may also act as a step up member as is described below in relation to the machine of **Figures 20 to 22****.**

**Figures 20 to 22** show a bale wrapping machine of the invention which applies successive overlying wraps of wrapping material, the bale wrapping machine comprising:
a wrapping mechanism for applying wrapping material to a bale; and a bale supporting arrangement 107 formed by rollers 120 and 121. A step up member 702 that is positioned (in the wrapping configuration thereof) on the chassis and below the bale supporting arrangement 107 and is for assisting in raising a bale to a partially raised position at a stage intermediate to a wrapping position on the bale supporting arrangement and a position on the ground.

One of the issues that arises, in particular with a loading arm configuration 201, is that the force required to lift a bale of the ground can be quite considerable. Providing the step up member 702 considerably reduces the amount of force that is required because less effort is required to have a bale progress onto the step up member, and once on the step up member, the step up member provides support for the weight of the bale thus reducing the effort required to move the bale further towards the bale supporting part 107 of the machine. For example, in the case of a cylindrical bale, the step up member will provide a raised support onto which the bale can be moved, for example pushed, such as with a loading arm 201.

In one simple arrangement the step up member is a fixed u-shaped buffer or bumper 703 against which the bale abuts to raise the bale to the partially raised position when the bale is moved against the bumper. This may be formed as a continuous piece of the chassis.

In particular the lifting force to have a bale move upwards to a position for wrapping is no longer relying solely upon the lifting force that can be imparted to the bale directly by rollers 120 and 121. Instead the bale will first be pushed against and rise off the ground when it hits the step up member 702 and then, as the loading arm 201 continues to load the bale, the bale then hits roller 120. In this way at least part of the weight of the bale is taken up by the step up member 702 before it is lifted clear of the step up member and is held aloft resting on the rollers 120 and 121.

It will be appreciated that two step up members may be provided, each for raising the bale to respective spaced apart partially raised positions, each at a respective stage intermediate to a wrapping position on the bale supporting arrangement and the ground during loading thereof. The step up members may be together, but acting as different (height) steps in raising the bale during loading thereof.

The step up member(s) will be in any form and that is suitable for allowing the bale to be raised towards the wrapping position. For example the step up member(s) may be in the form of an inclined surface such a ramp surface.

In one particularly desirable construction the step up member(s) 702 also act as step down member(s) for lowering the bale to a partially lowered position at a stage intermediate (in height) to a wrapping position on the bale supporting arrangement and the ground during unloading thereof. This works in a manner in reverse to the loading process. Instead of being dropped directly on the ground when loading arm 201 moves out towards an unloading position the bale first moves down and rests on the step-up member 702, which holds the bale off the ground but in a position where it is supported by the step-up member 702. Again, this may be achieved by moving the loading arm 201 towards an unloading position. This means that the bale drops in a staged way to the ground and thus is more cushioned from damage it might otherwise experience from being dropped directly on the ground.

In one particularly desirable arrangement the step up member(s) 702 also acts as an end tip member to assist in tipping a wrapped bale over on its end during unloading thereof. For example the step up member 702 may hold one end of a bale in a raised position while the remainder of the bale is lowered towards the ground thus causing a tilting of the bale. In this position, the bale may by itself tip over on its end or for example the wrapping machine can be moved (for example backwards in the case of rear unloading) to push the bale over on its end from the tilted position. In this way the bale can be moved through 90°. For example, in the case of a cylindrical bale, the bale may be tipped over on its flat end. This can be advantageous as it stops the bale from rolling away for example if the bale is unloaded on an inclined surface. One or more step up members may be utilised in conjunction with any configuration of machine described herein.

The invention also shows in the bale wrapping machine 101 of **Figures 20-22** a machine which applies successive overlying wraps of wrapping material, the bale wrapping machine 101 comprising:
a mounting (see brackets 136; 139) for a three point linkage of a tractor;
a wrapping mechanism for applying wrapping material to a bale;
a bale supporting arrangement (107); and
one or more ground engaging members, in the form of a roller 250 that allows the weight of the machine 101, and any bale on it, to be at least partially transmitted to the ground via the roller 250 when mounted on a three-point linkage of a tractor and during operational travel of the machine 101. In other words the machine can be mounted on a three point linkage which typically is utilised to hold a machine off the ground yet be driven along while sitting on/running along the ground. The machine 101 can be operated in the same manner as if it were held off the ground by a three-point linkage. This is an important aspect of the invention. A wrapping machine together with a bale that is mounted thereon for wrapping thereof can be a considerable weight for any tractor to bear (on its three point linkage). The tractor may not be strong enough to lift the machine and the bale off the ground. Providing the ground engaging members which can support the machine during wrapping operation of the machine and as it is moved during wrapping, substantially reduces the amount of weight that would otherwise be applied to the three point linkage of a tractor. Accordingly, a machine of this construction is advantageous because a tractor with a lesser capacity to lift heavier weights can be utilised as compared to a machine that requires the three point linkage to hold it off the ground during wrapping operation/travel. Furthermore even if the tractor can lift the machine and the bale it may cause a weight distribution issue where the front wheels lift up off the ground. The ground engaging members of the invention ameliorate this problem also. The roller 250 is mounted with a longitudinal axis substantially transverse to the machine 101 and it is mounted for rotation between is mounted for rotation between the members forming the lower horizontal portion 106. The bale supporting arrangement described herein is applicable to all wrapping machines described herein.

Also in the arrangement of **Figures 20 to 22** one roller 120 is fixed in operation but is adjustable between at least two fixed positions, and in particular three fixed positions, to accommodate different size bales. As mentioned above it is desirable that the rollers 120;121 can accommodate wrapping of bales with a diameter in the range from about 1 metre up to about 1.6 metres. The respective fixed positions allow an adjustment both in a generally horizontal and in a generally vertical direction.

This is achieved using a pivot adjustment mechanism 180. The mechanism 180 comprises two spaced apart brackets 181 which are mounted to the chassis 102. Pins 182 pivotably mount the roller 120 to the brackets 181. Adjustment is allowed by pins 184 that can be selectively engaged in one of three apertures 185 in each of the brackets 181. It will be appreciated that such adjustment allows for both vertical and horizontal movement of the roller 120 by pivoting action about pins 182. This in turn means that not only is the bale seated on the rollers 120,121 but also that the bale is sufficiently centred so that wrapping is about the centre of the bale for bales of different sizes. It will be appreciated that for a cylindrical bale the further the applied wrap is from passing about the centre of the bale the more likely the wrap is to slip off the bale. With bales of differing diameters, and without adjustment a larger diameter bale will sit higher up than a smaller diameter bale. Accordingly it is desirable that the fixed positions are configured so as to maintain a substantially centred (vertical and horizontal) position relative to the wrapping arm(s). This is achieved with the configuration shown. This aspect, like all other aspects of the invention, can be used in conjunction with one or more other aspects of the invention.

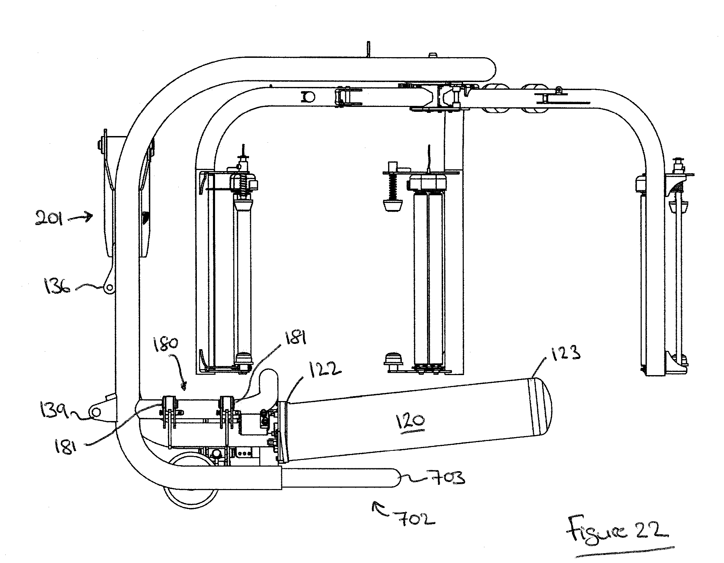

The invention also shows in the bale wrapping machine 101 of **Figure 22** a machine which applies successive overlying wraps of wrapping material, the bale wrapping machine 101 comprising:
a wrapping mechanism for applying wrapping material to a bale; a bale supporting arrangement 107; and at least one roller 120 having a forward end 122 and a rearward end 123 forming part of the bale supporting arrangement and for rotating the bale during wrapping thereof wherein said at least one roller is mounted on the machine so as to be angled upwards from the forward end toward the rearward end at an angle from about 3 degrees to about 10 degrees, such as from about 3 to about 6 degrees for example from about 4 to about 6 degrees such as about 5 degrees relative to a horizontal plane of the machine. The roller 120 will thus be angled upward relative to a plane perpendicular to the axis of rotation of the wrapping arm(s). Desirably both rollers 120 and 121 are angled upwards to substantially the same extent. Angling the roller(s) upwards has the advantage of helping to prevent drift of a bale off the end of the rollers. It also helps to improve the distribution of film on the bale. For example with increased speed of turning of the bale it is more difficult to get the wrapping material, e.g. film, to pass across the centre of the bale at the back due to the increased speed at which the bale is turning. For example the bale has to rotate faster with three wrapping arms than it does with two in order to get the film overlap correct. This faster rotation of the bale means that during the wrapping cycle after the wrapping material comes around one edge of the bale, the bale has rotated around considerably further relative to a machine with one or two wrapping arms. This means the wrapping material is inclined to hit the bale high on one side (for example in a rear mounted arrangement the side furthest from the tractor) and low on the opposite side. Tilting the rollers upwards as described means that during wrapping the wrapping is applied across the centre of both sides of the bale. As an alternative, or in addition, the axis of rotation of the wrapping arms could be tilted from being perpendicular relative to a horizontal plane of the mechanism for rotating the bale during wrapping to achieve a similar relative angle.

Also shown in **Figures 20 to 22** is an altemative arrangement to that where a conical roller 155 provided on the lower portion 106 of the chassis 102. Instead a bale stop barrier 157 is provided which comprises a frame portion comprising a top portion 166, two upright portions 167 and a base portion 168 which together from a barrier to prevent a bale moving too far forward on the machine. They also form a frame portion in which a rotatable stop in the form of a roller such as a cylindrical roller may be provided. This provides a rotatable stop that does not interfere with wrapping of the bale but helps to keep the bale in place for wrapping thereof.

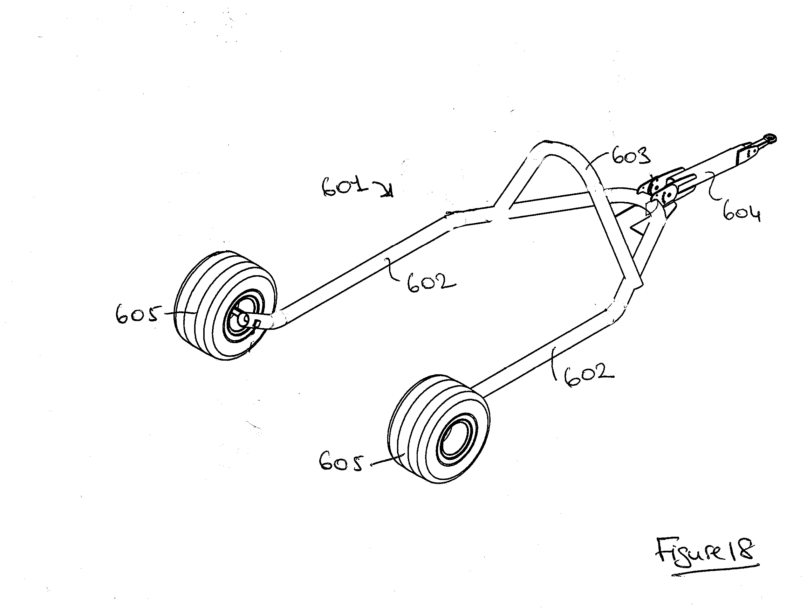

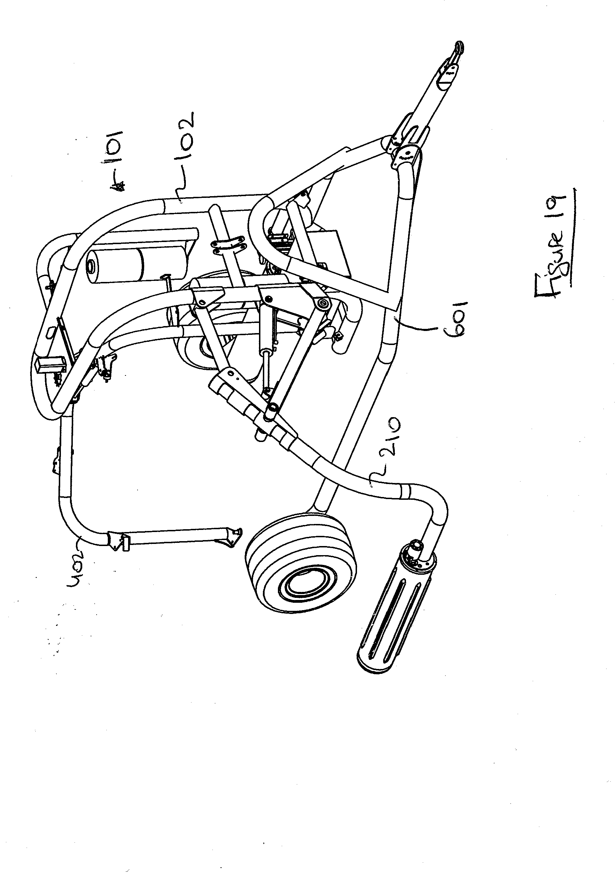

A further aspect of the present invention is a bale wrapping machine that is provided in two parts. This is shown in **Figures 18** **and** **19****.** The first part is a machine of the type described previously and mounted on a chassis 102. As described above, the chassis 102 has a bale supporting arrangement and a wrapping mechanism for wrapping a bale supported thereon.

Also provided is a second ground engaging part that acts as a support for the first part, wherein the first part is releasably attachable to the second part. In the embodiment, the second part is provided by a trailer or dolly 601. While it is referred to as a trailer herein it will be appreciated that it may form a wheeled stand or the wheels may be moved clear of the ground or detached to form a non-wheeled stand. In keeping with the theme of simplicity of construction, the mainframe of the trailer 601 is formed by a single member which is shaped, for example bent, into a general bifurcated shape having two arms 602.

A cross member 603 forms an upright support that transverses the arms 602. A drawbar 604 is also provided. Wheels 605 are provided at the other end of the trailer 601.

It will be noted that both the wheels 605 and the drawbar 604 are detachable from the main frame of the trailer 601. In such a case the remaining frame formed by arms 602 and upright 603 can provide a stand for a machine 101. This may be useful when the machine is going to be powered in a standing position and the bales are going to be brought to it for wrapping.

**Figure 19** shows a schematic of how a machine 101 and the trailer 601 may be coupled together. It will be appreciated that in the configuration of **Figure 19****,** the machine 101 can be operated as a trailed machine. Typically it will be drawn behind a tractor in an in-line position. The loading arm 210 can then be utilised to load a bale as described previously. To the extent necessary the arm will pull the bale across the frame, for example an arm 602 of the trailer 601. So the trailer 601 can be pulled up alongside a bale which can then be loaded by the loading arm 210. The bale can then be wrapped. It will be appreciated that because of the open end of the trailer arising from the bifurcated construction of the trailer 601, a bale can be easily unloaded to the rear thereof. It will be appreciated that the machine 101 and the trailer 601 could be arranged in a position where there is relative rotation of 90 degrees (between the machine and the trailer) as compared to the configuration shown, for example the machine could be oriented with the loading arm positioned to open out to the front of the trailer 601 to pick up a bale forwards of the trailer 601.

As before the loading arm may be provided on an opposite side, or there may be two loading arms on opposite sides. There may be no loading arm in which case the bale must be loaded by other means, for example a front loader or a side loading arrangement.

Desirably the first part is releasably attachable to the second part by a mounting arrangement which mounting arrangement is also suitable for attachment to a three point linkage on a tractor.

Optionally the ground engaging part can forms a stand with one or more legs.

As described above, the first part can be formed by a chassis for a wrapping machine, the chassis comprising a main chassis member which has
(i) an upper substantially horizontal portion upon which to mount a wrapping arm;
(ii) a lower substantially horizontal portion upon which to mount at least part of a bale supporting arrangement; and
(iii) a substantially upright portion running from the upper portion to the lower portion
wherein the main chassis member is a unitary member that forms the upper substantially horizontal portion, the lower substantially horizontal portion and the substantially upright portion.

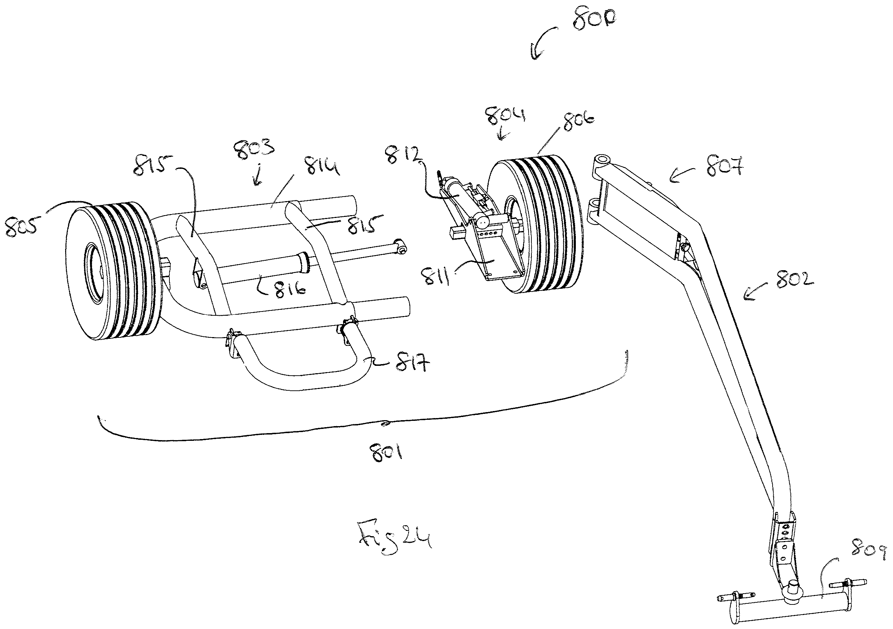

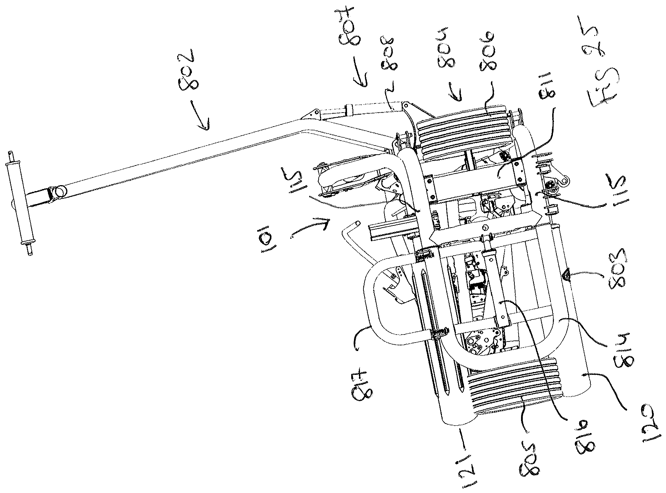

**Figure 24** shows a perspective view of a kit of parts 800 for converting a machine suitable for wrapping bales that is adapted to be mounted directly on a tractor (for example a three point linkage) into an (offset) trailed machine. The machine to which it is attached may have any combination of the features described including the machines shown in each of **Figures 1 to 8****;** **15 to 17****; and** **20 to 23.** For example the kit could be used as an alternative type of trailer/dolly type arrangement shown in **Figures 18** **and** **19****.** **Figure 25** is an underneath perspective view, of the kit of parts 800 of Figure 24 mounted to a machine 101 of the invention to form a trailed machine 810.

Referring now to all of **Figures 24 to 29****,** the bale wrapping machine 810 of the invention is provided in three main parts: a first part which is a wrapping machine 101 which has a chassis 102 which has a bale supporting arrangement 107 and a wrapping mechanism including wrapping arms 105 for wrapping a bale 240 supported thereon. It also has a (second) ground engaging part 801 that acts as a support for the first part. A third part is a drawbar 802.

Optionally, the ground engaging part may itself be provided in two or more separate parts. For example it may comprise two parts 803 and 804, with a ground engaging support such as a wheel 805, 806 on each part. This means that instead of joining the parts together in a trailer-like assembly, and then fitting the machine to that assembly, instead, the parts are individually attached to the machine. This forms a trailable assembly.

This means that the ground engaging part 801 and the drawbar 802 do not have to be connected to each other directly, but instead are optionally each connected to the chassis 102 of the machine 101.

It will be appreciated that the kit 800 of **Figure 24** can be (reversibly) attached to a machine and detached again so that the machine can be used as a "linkage" machine, for example where it is directly mounted onto a tractor, or alternatively as a trailed machine.

The ground engaging part 801 is attachable so as to extend on an underside of the chassis so that wheels 805 and 806 keep the machine 101 clear of the ground. The drawbar 802 is attached so as to extend in a towing direction.

In one simple arrangement the drawbar 802 is attached to one of the upright portions 108 of the chassis 101. Attachment (pivotably) may be done by any suitable arrangement including a bracket and/or pin arrangement, utilising U-bolts or clamps. The upright portion 108 to which it is attached may be an upright portion (of the tower or mast) that supports the wrapping arms 105.

Within the construction of the ground engaging part 801 one part 804 with one wheel 806 may be fixed, while the other part 803 (with wheel 806) is moveable (adjustable) to provide (width) adjustment.

Desirably, as above the drawbar 802 is an adjustable drawbar which allows for a relative offset of the machine to the tractor. This means that the trailed machine can be offset relative to a tractor, for example when working during wrapping utilising the adjustable drawbar to effect an offset, and, when finished reversing the adjustment of the drawbar to reverse the offset, for example for road travel.

The drawbar 802 carries at least part of an offset mechanism 807 including an actuator to effect the offset in the form of a hydraulic ram 808. The offset is achieved by pivoting of the drawbar relative to the remainder of the machine and the hydraulic ram 808 acting between the drawbar and the machine to effect the pivoting action. Provided on the drawbar is a cross piece or towbar 809 which is adapted to be carried by the linkage arms of a three point linkage so as to allow the machine to be towed by the arms of a three point linkage of a tractor.

The distance between the wheels 805 and 806 (for example measured as the distance from the outside of one wheel to the outside of the other transversely to the direction of travel) is adjustable.

The wheel 805 is rotatably mounted on a mount formed by a U-shaped member 814. The U-shaped member 814 has cross members 815 for strength/reinforcement. Mounted on the cross members 815 is an actuator in the form of a hydraulic ram 816. This ram is for adjusting the position of the wheel 805 relative to the remainder of the machine. It will be appreciated however that this adjustment may also be done by a manually adjustment mechanism.

On the mount 814 there is provided a step up member 817. This operates to assist with raising a bale of the ground in a manner as has been described previously.

The wheel 806 of the fixed wheel part 804 is carried on a mounting bracket 811. The mounting bracket 811 is for reversibly attaching the fixed wheel part 804 to the underside of the machine 101. Also carried on the mounting bracket 811 is an actuator in the form of a hydraulic ram 812 which is for effecting movement of a roller which forms part of the bale supporting arrangement 107 as will be described in more detail below.

As described above, the main chassis member 103 is formed from a unitary member which runs from opposing sides on the upper substantially horizontal portion to form two substantially upright portions 108, and two lower substantially horizontal portions 115. As is desirable the ground engaging portion 803 and the two lower substantially horizontal portions 115 are be slidably moveable relative to each other, by telescopic movement, so as to allow (width) adjustment. In particular the respective arms of the U-shaped portion 814 mate with and sliding engage with the portions 115 of the chassis. By also engaging the ram 816 to the chassis102 relative sliding movement can be affected by the hydraulic ram 816. This means that in effect the wheel 805 can be moved in and out relative to the remainder of the machine.

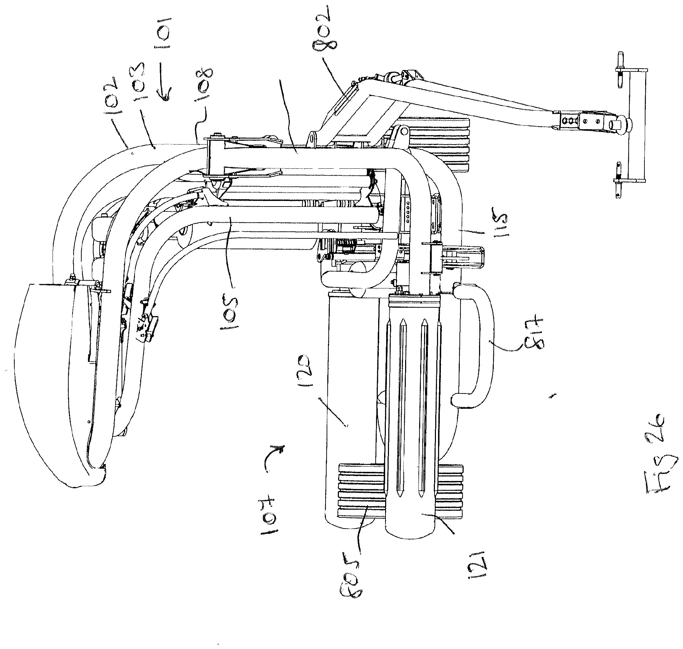

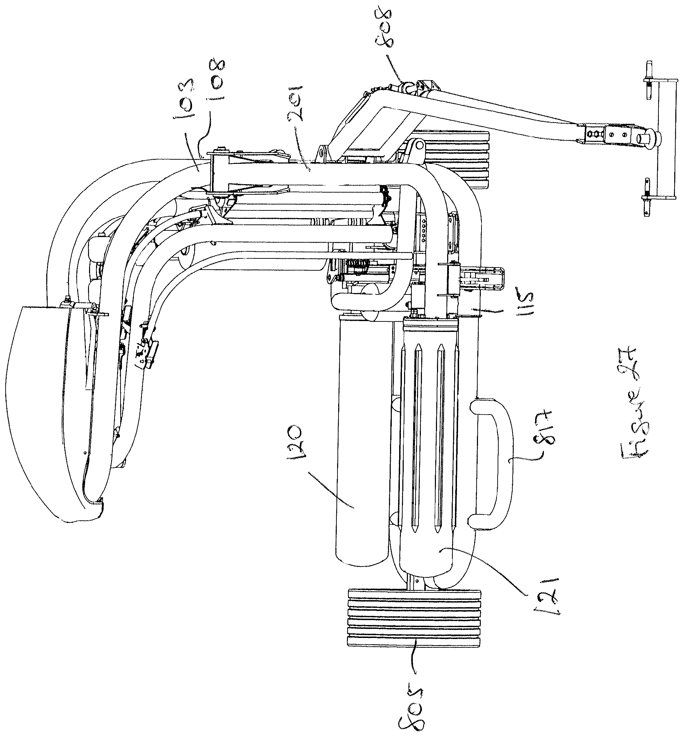

As is best seen by comparison of **Figures 26** **and** **27****,** the wheel 805 can be moved from a working configuration (for wrapping) where the wheels are further apart as shown in **Figure 27** and a more compact configuration where the wheels are closer together as shown in **Figure 26****.** The more compact configuration is more suited to travel, for example road travel. The extended configurations increases the stability of the machine which is more desirable while it is working to wrap.

It will be appreciated that in the compact configuration the wheel 805 is located at a position in which it would interfere with wrapping of a bale 240.

The bale supporting mechanism 107 comprises two rollers 120 and 121. The roller 121 is carried on a loading arm 201 as previously described. It will be appreciated that in order to wrap a bale 240, it must sit on the rollers 120 and 121 and be rotated by them. It will be appreciated that in the compact configuration the wheel 805 is in a position in which it would interfere with the bale sitting on the bale supporting arrangement. In particular, it would prevent a bale from sitting properly on rollers 120 and 121. Part of the bale would rest on top of the wheel. However, this does result in a very compact configuration because the wheel no longer extends beyond the end of the bale supporting arrangement. Even though it is not necessary, because a part of the bale (being wrapped) will typically extend down between the two rollers, it is desirable that the top of the wheel is at a position that is higher than the top of the rollers forming the bale supporting arrangement. This makes the machine very compact in a height direction also, and may help lower the centre of gravity, and thus increase the stability of the machine reducing the likelihood of the machine toppling over.

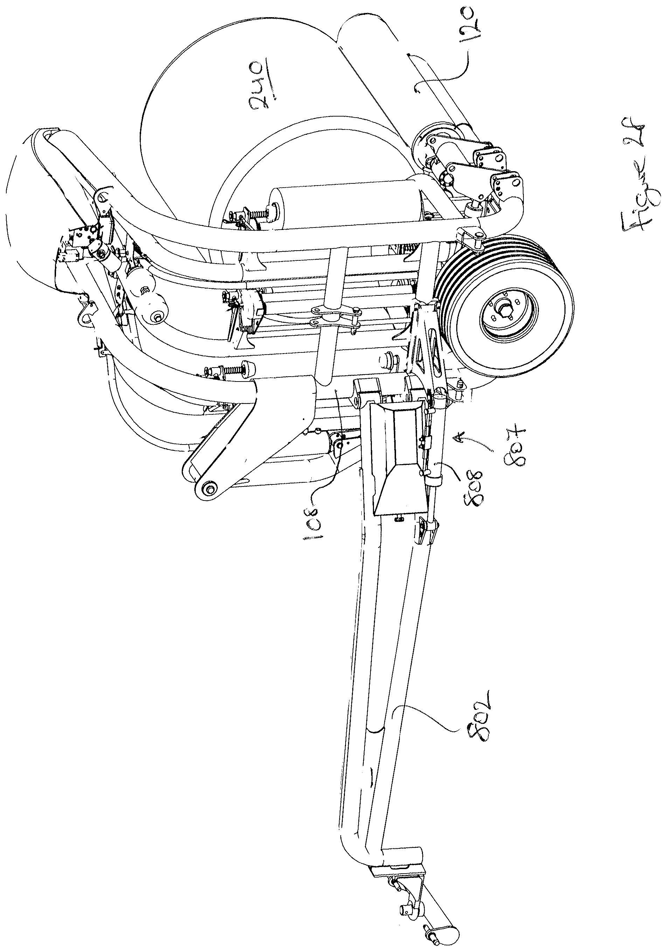

**Figure 28** is a side perspective view, of the machine of Figure 24 in use for wrapping a bale 240. In this configuration the drawbar 802 is in the offset position.

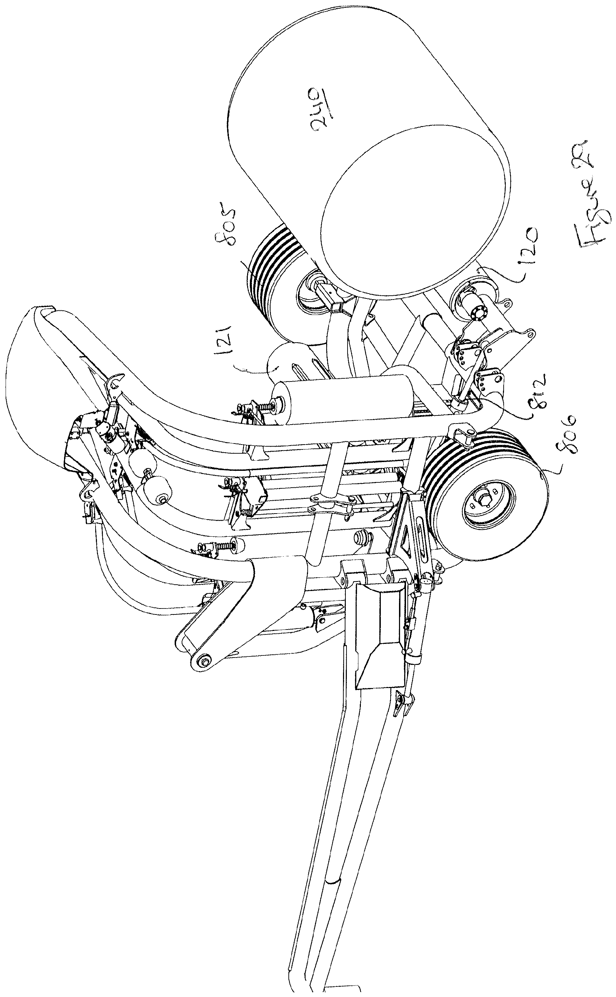

**Figure 29** is a side perspective view, of the machine of Figure 24 in use for unloading a wrapped bale 240. It will be noted that the hydraulic ram 812, is utilised to move the roller 120 rearwardly and downwardly to allow tipping of the bale 240 onto the ground. If desired, an end tip member may be utilised to stand the bale on its flat end.

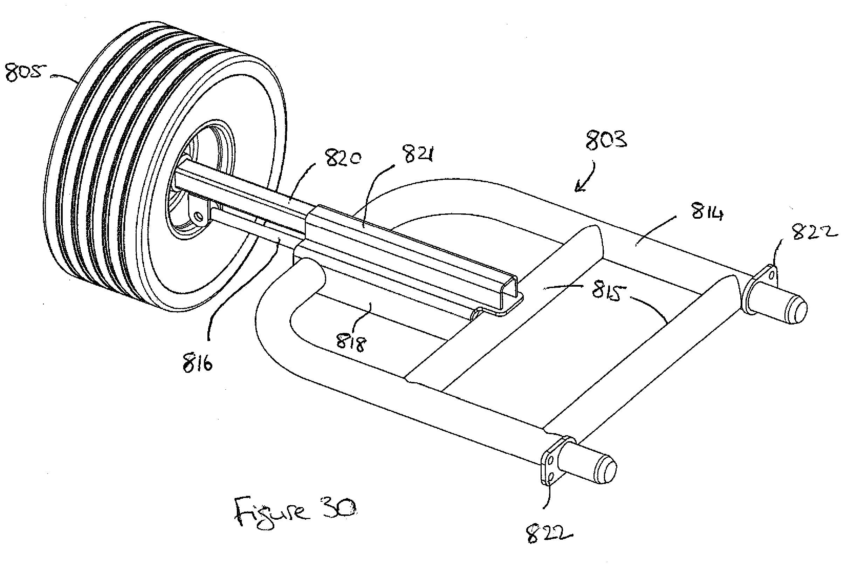

**Figure 30** is a perspective view of an alternative ground engaging portion 803. In this embodiment the respective arms of the U-shaped portion 814 mate with engage with the portions 115 of the chassis in a fixed arrangement optionally using brackets 822. The adjustment of the wheel 805 is done manually or mechanically by slidably adjusting an axle 820 relative to the remainder of the machine. In the embodiment the axle 820 is slidable relative to a housing 821. An actuator in the form of a hydraulic ram 816 is utilised to effect the movement. However, adjustment may also alternatively be done manually. This means that in effect the wheel 805 can be moved in and out relative to the remainder of the machine.

## Claims

1. A bale wrapping machine (101) which applies successive overlying wraps of wrapping material (403), the bale wrapping machine (101) comprising:
a. a wrapping mechanism (401) for applying wrapping material (403) to a bale (240);
b. a bale supporting arrangement (107); and
c. a cut and hold mechanism (301),
wherein the machine (101) comprises three rotating wrapping arms (402) **characterised in that**, in a repeated working cycle for wrapping successive bales (240), the three rotating wrapping arms (402) have a first wrapping configuration where they are spaced substantially equally apart, for cooperatively rotationally wrapping a bale (240) with wrapping material (403), and have a second configuration where, at the start of a wrapping cycle, and at the end of a wrapping cycle, the three working (402) arms are brought together proximate each other so that respective wrapping material (403) from each arm (402) is cut and held by one cut and hold mechanism (301).

2. A bale wrapping machine (101) according to Claim 1 wherein one arm (402) acts a master arm and the other two arms (402) act as slave arms.

3. A bale wrapping machine (101) according to any preceding claim wherein the cut and hold mechanism (301) is mounted in a fixed substantially vertical orientation, optionally wherein it is mounted at a position where it is below the wrapping material (403) being applied to the bale (240).

4. A bale wrapping machine (101) according to any preceding claim wherein the cut and hold mechanism (301) is provided with an anti-torsion mechanism to resist twisting of the cut and hold mechanism (301) in its open position.

5. A bale wrapping machine (101) according to any preceding claim wherein the cut and hold mechanism (301) is mounted at a position where it is below the wrapping material (403) being applied to the bale (240), and has an operational cycle with
a. a wrapping material engaging configuration where it extends substantially vertically upwardly to catch the wrapping material (403) from all three wrapping arms (402);
b. a cut and hold configuration where it retracts substantially vertically downwardly to cut and hold the wrapping material (403) thus allowing release of a bale (240) that has been wrapped and holding the material (403) for the next wrapping cycle; and
c. a wrapping start configuration where the wrapping material (403) is released after the wrapping material (403) has been sufficiently wrapped on itself to hold itself on the bale (240).

6. A bale wrapping machine (101) according to any preceding claim, further comprising a rotation mechanism (101,102) for rotating the bale (240) while successive wraps are being applied so that the wrap is applied to the entire bale (240) in successive overlapping wraps of wrapping material (403), and the machine (101) further comprises an automated control that automatically relatively adjusts the rotation of the bale (240) and the speed of wrapping arm movement so that the machine (101) can operate whether one, two or all three wrapping arms (402) are applying wrapping material (403).

7. A bale wrapping machine (101) according to any preceding claim wherein the wrapping arms (402) are mounted on a common slew ring (128).

8. A bale wrapping machine (101) according to any preceding claim wherein the cut and hold mechanism (301) for cutting and holding the wrapping material (403) after a bale (240) is wrapped, the cut and hold mechanism (301) opening to engage the wrapping material (403), and closing to cut and hold it, wherein when the cut and hold mechanism (301) opens, it extends in length by an amount greater than its closed length.

9. A bale wrapping machine (101) according to Claim 8 wherein the cut and hold mechanism (301) comprises a multistage arrangement to move the mechanism from an open position to a closed position and from the closed position to the open position.

10. A bale wrapping machine (101) according to Claim 8 or 9 wherein the cut and hold mechanism (301) comprises a multistage double acting arrangement to move the mechanism from an open position to a closed position and from the closed position to the open position.

11. A bale wrapping machine (101) according to any of Claims 8 to 10 wherein the cut and hold mechanism (301) comprises a multistage arrangement that comprises at least two single acting hydraulic cylinders which are arranged so that together they form a multistage hydraulic cylinder arrangement to move the mechanism from an open position to a closed position and from the closed position to the open position.

12. A bale wrapping machine (101) according to any of Claims 8 to 11 wherein the hydraulic cylinder arrangement comprises at least two double acting hydraulic cylinders which are arranged so that together they form a multistage double acting hydraulic cylinder arrangement to move the mechanism from an open position to a closed position and from the closed position to the open position.

13. A bale wrapping machine (101) according to any preceding claim wherein the cut and hold mechanism (301) further comprises a self-cleaning mechanism to remove any residue of wrapping material (403) off the cut-and hold mechanism as the cut-and hold mechanism opens or closes or both, for example a scraper, to scrape any residue of wrapping material (403) off the cut-and hold mechanism as the cut-and hold mechanism opens or closes or both.

14. A bale wrapping machine (101) according to any preceding claim wherein the cut and hold mechanism (301) comprises a wrapping material engaging portion that has at least two projections with a recess therebetween so that wrapping material (403) held against the cut and hold mechanism (301) abuts the projections and spans across the recess.

15. A bale wrapping machine (101) according to Claim 14 wherein the wrapping material engaging portion has projections in the form of a series of at least three splines.

## Patentansprüche

1. Eine Ballenwickelmaschine (101), die aufeinanderfolgende übereinanderliegende Wicklungen aus Wickelmaterial (403) anbringt, wobei die Ballenwickelmaschine (101) Folgendes aufweist:
a. einen Wickelmechanismus (401) zum Anbringen von Wickelmaterial (403) an einem Ballen (240);
b. eine Ballentraganordnung (107); und
c. einen Schneid- und Haltemechanismus (301),
wobei die Maschine (101) drei rotierende Wickelarme (402) aufweist, **dadurch gekennzeichnet, dass** in einem wiederholten Arbeitszyklus zum Umwickeln aufeinanderfolgender Ballen (240) die drei rotierenden Wickelarme (402) eine erste Wickelkonfiguration aufweisen, in der sie im Wesentlichen gleichmäßig voneinander beabstandet sind, um gemeinsam einen Ballen (240) mit Wickelmaterial (403) zu umwickeln, und eine zweite Konfiguration aufweisen, bei der zu Beginn eines Wickelzyklus und am Ende eines Wickelzyklus die drei Arbeitsarme (402) zusammengeführt werden, so dass das jeweilige Wickelmaterial (403) von jedem Arm (402) durch einen Schneid- und Haltemechanismus (301) geschnitten und gehalten wird.

2. Ballenwickelmaschine (101) nach Anspruch 1, wobei ein Arm (402) als Hauptarm und die anderen beiden Arme (402) als Nebenarme fungieren.

3. Ballenwickelmaschine (101) nach einem der vorhergehenden Ansprüche, wobei der Schneid- und Haltemechanismus (301) in einer festen, im Wesentlichen vertikalen Ausrichtung montiert ist, optional an einer Position angebracht ist, an der er sich unterhalb des auf den Ballen (240) aufgebrachten Wickelmaterials (403) befindet.

4. Ballenwickelmaschine (101) nach einem der vorstehenden Ansprüche, wobei der Schneid- und Haltemechanismus (301) mit einem Antitorsionsmechanismus versehen ist, um einem Verdrehen des Schneidund Haltemechanismus (301) in seiner offenen Position zu widerstehen.

5. Ballenwickelmaschine (101) nach einem der vorstehenden Ansprüche, wobei der Schneid- und Haltemechanismus (301) an einer Position angebracht ist, an der er sich unterhalb des auf den Ballen (240) aufgebrachten Wickelmaterials (403) befindet, und einen Betriebszyklus mit
a. einer Wickelmaterial-Eingriffskonfiguration, in der er sich im Wesentlichen vertikal nach oben erstreckt, um das Wickelmaterial (403) von allen drei Wickelarmen (402) aufnimmt;
b. eine Schneide- und Haltekonfiguration, in der sie sich im Wesentlichen vertikal nach unten zurückzieht, um das Wickelmaterial (403) zu schneiden und zu halten, wodurch ein Ballen (240), der eingewickelt wurde, freigegeben werden kann, und das Material (403) für den nächsten Wickelzyklus gehalten wird; und
c. eine Wickelstartkonfiguration, in der das Wickelmaterial (403) freigegeben wird, nachdem das Wickelmaterial (403) ausreichend auf sich selbst gewickelt wurde, um sich selbst auf dem Ballen (240) zu halten.

6. Ballenwickelmaschine (101) gemäß einem der vorstehenden Ansprüche, ferner aufweisend einen Drehmechanismus (101, 102) zum Drehen des Ballens (240), während aufeinanderfolgende Wicklungen aufgebracht werden, so dass die Wicklung auf den gesamten Ballen (240) in aufeinanderfolgenden, überlappenden Wicklungen aus Wickelmaterial (403) aufgebracht wird, und die Maschine (101) ferner eine automatische Steuerung aufweist, die automatisch die Drehung des Ballens (240) und die Geschwindigkeit der Wickelarmbewegung relativ zueinander anpasst, so dass die Maschine (101) arbeiten kann, unabhängig davon, ob ein, zwei oder alle drei Wickelarme (402) Wickelmaterial (403) anbringen.

7. Ballenwickelmaschine (101) nach einem der vorhergehenden Ansprüche, wobei die Wickelarme (402) an einem gemeinsamen Schwenkring (128) angebracht sind.

8. Ballenwickelmaschine (101) nach einem der vorhergehenden Ansprüche, wobei der Schneid- und Haltemechanismus (301) zum Schneiden und Halten des Wickelmaterials (403), nachdem ein Ballen (240) eingewickelt ist, sich der Schneide- und Haltemechanismus (301) öffnet, um das Einwickelmaterial (403) zu ergreifen, und sich schließt, um es zu schneiden und zu halten, wobei sich der Schneide- und Haltemechanismus (301) beim Öffnen in der Länge um einen Betrag ausdehnt, der größer ist als seine geschlossene Länge.

9. Ballenwickelmaschine (101) nach Anspruch 8, wobei der Schneide- und Haltemechanismus (301) eine mehrstufige Anordnung aufweist, um den Mechanismus von einer offenen Position in eine geschlossene Position und von der geschlossenen Position in die offene Position zu bewegen.

10. Ballenwickelmaschine (101) nach Anspruch 8 oder 9, wobei der Schneideund Haltemechanismus (301) eine mehrstufige doppeltwirkende Anordnung aufweist, um den Mechanismus von einer offenen Position in eine geschlossene Position und von der geschlossenen Position in die offene Position zu bewegen.

11. Ballenwickelmaschine (101) nach einem der Ansprüche 8 bis 10, wobei der Schneid- und Haltemechanismus (301) eine mehrstufige Anordnung aufweist, die mindestens zwei einfach wirkende Hydraulikzylinder aufweist, die so angeordnet sind, dass sie zusammen eine mehrstufige Hydraulikzylinderanordnung bilden, um den Mechanismus von einer offenen Position in eine geschlossene Position und von der geschlossenen Position in die offene Position zu bewegen.

12. Ballenwickelmaschine (101) nach einem der Ansprüche 8 bis 11, wobei die Hydraulikzylinderanordnung mindestens zwei doppelt wirkende Hydraulikzylinder aufweist, die so angeordnet sind, dass sie zusammen eine mehrstufige doppelt wirkende Hydraulikzylinderanordnung bilden, um den Mechanismus von einer offenen Position in eine geschlossene Position und von der geschlossenen Position in die offene Position zu bewegen.

13. Ballenwickelmaschine (101) nach einem der vorhergehenden Ansprüche, wobei der Schneid- und Haltemechanismus (301) ferner einen Selbstreinigungsmechanismus aufweist, um etwaige Rückstände von Wickelmaterial (403) vom Schneid- und Haltemechanismus zu entfernen, wenn sich der Schneid- und Haltemechanismus öffnet oder schließt oder beides, beispielsweise einen Schaber, um etwaige Reste des Verpackungsmaterials (403) vom Schneid- und Haltemechanismus abkratzen, wenn der Schneid- und Haltemechanismus geöffnet oder geschlossen wird oder beides.

14. Ballenwickelmaschine (101) nach einem der vorhergehenden Ansprüche, wobei der Schneid- und Haltemechanismus (301) einen Abschnitt zum Greifen des Verpackungsmaterials aufweist, der mindestens zwei Vorsprünge mit einer Aussparung dazwischen aufweist, so dass das Verpackungsmaterials (403), das gegen den Schneide- und Haltemechanismus (301) gehalten wird, an den Vorsprüngen anliegt und sich über die Aussparung erstreckt.

15. Ballenwickelmaschine (101) nach Anspruch 14, wobei der Wickelmaterialeingriffsabschnitt Vorsprünge in Form einer Reihe von mindestens drei Keilen aufweist.

## Revendications

1. Machine d'enrubannage de balles (101) qui applique des enveloppements superposés successifs de matériau d'enrubannage (403), la machine d'enrubannage de balles (101) comprenant :
a. un mécanisme d'enrubannage (401) pour appliquer du matériau d'enrubannage (403) à une balle (240) ;
b. un agencement de support de balles (107) ; et
c. un mécanisme de coupe et de maintien (301),
la machine (101) comprenant trois bras d'enrubannage rotatifs (402),
**caractérisée en ce que**, dans un cycle de travail répété pour enrouler des balles (240) successives, les trois bras d'enrubannage rotatifs (402) ont une première configuration d'enrubannage où ils sont espacés de manière sensiblement égale l'un de l'autre, pour enrouler de manière coopérative et rotative une balle (240) avec un matériau d'enrubannage (403), et ont une seconde configuration dans laquelle, au début d'un cycle d'enrubannage et à la fin d'un cycle d'enrubannage, les trois bras de travail (402) sont rapprochés l'un de l'autre de sorte que le matériau d'enrubannage (403) respectif de chaque bras (402) soit coupé et maintenu par un mécanisme de coupe et de maintien (301).

2. Machine d'enrubannage de balles (101) selon la revendication 1, un bras (402) agissant en tant que maître-bras et les deux autres bras (402) agissant en tant que bras récepteur.

3. Machine d'enrubannage de balles (101) selon l'une quelconque des revendications précédentes, le mécanisme de coupe et de maintien (301) étant monté dans une orientation fixe sensiblement verticale ou, en option, étant monté dans une position dans laquelle il est en-dessous du matériau d'enrubannage (403) en train d'être appliqué à la balle (240).

4. Machine d'enrubannage de balles (101) selon l'une quelconque des revendications précédentes, le mécanisme de coupe et de maintien (301) comprenant un mécanisme anti-torsion pour résister à la torsion du mécanisme de coupe et de maintien (301) dans sa position ouverte.

5. Machine d'enrubannage de balles (101) selon l'une quelconque des revendications précédentes, le mécanisme de coupe et de maintien (301) étant monté dans une position dans laquelle il est en-dessous du matériau d'enrubannage (403) en train d'être appliqué à la balle (240), et ayant un cycle de fonctionnement avec
a. une configuration de prise du matériau d'enrubannage dans laquelle il s'étend sensiblement verticalement vers le haut pour attraper le matériau d'enrubannage (403) de tous les trois bras (402) ;
b. une configuration de coupe et de maintien dans laquelle il se retire sensiblement verticalement vers le bas pour couper et maintenir le matériau d'enrubannage (403), permettant ainsi de lâcher une balle (240) qui vient d'être enrubannée et de maintenir le matériau (403) pour le prochain cycle d'enrubannage ; et
c. une configuration de début d'enrubannage dans laquelle le matériau est lâché lorsque le matériau d'enrubannage (403) a été suffisamment enroulé sur lui-même pour tenir tout seul sur la balle (240).

6. Machine d'enrubannage de balles (101) selon l'une quelconque des revendications précédentes, comprenant en outre un mécanisme de rotation (101, 102) pour faire tourner la balle (240) pendant que des tours successifs sont appliqués de façon que l'enrubannage soit appliqué à la balle (240) complète dans des tours successifs se chevauchant de matériau d'enrubannage (403), et la machine (101) comprenant en outre une commande automatique qui ajuste automatiquement et relativement la rotation de la balle (240) et la vitesse du mouvement des bras d'enrubannage de façon que la machine (101) puisse fonctionner lorsque un, deux ou tous les trois bras d'enrubannage (402) appliquent du matériau d'enrubannage (403).

7. Machine d'enrubannage de balles (101) selon l'une quelconque des revendications précédentes, les bras d'enrubannage (402) étant montés sur une couronne (128) commune.

8. Machine d'enrubannage de balles (101) selon l'une quelconque des revendications précédentes, le mécanisme de coupe et de maintien (301), pour couper et maintenir le matériau d'enrubannage (403) après d'enrubannage d'une balle (240), s'ouvrant pour saisir le matériau d'enrubannage (403) et fermant pour le couper et maintenir, le mécanisme de coupe et de maintien (301), lorsqu'il s'ouvre, s'étendant sur une longueur plus grande que sa longueur en état fermé.

9. Machine d'enrubannage de balles (101) selon la revendication 8, le mécanisme de coupe et de maintien (301) comprenant un agencement à plusieurs étages pour déplacer le mécanisme (301) d'une position ouverte à une position fermée et de la position fermée à la position ouverte.

10. Machine d'enrubannage de balles (101) selon la revendication 8 ou 9, le mécanisme de coupe et de maintien (301) comprenant un agencement à double effet à plusieurs étages pour déplacer le mécanisme d'une position ouverte à une position fermée et de la position fermée à la position ouverte.

11. Machine d'enrubannage de balles (101) selon l'une quelconque des revendications 8 à 10, le mécanisme de coupe et de maintien (301) comprenant un agencement à plusieurs étages qui comprend au moins deux vérins hydrauliques à simple effet qui sont agencés de sorte que, ensemble, ils forment un agencement de vérins hydrauliques à plusieurs étages pour déplacer le mécanisme d'une position ouverte à une position fermée et de la position fermée à la position ouverte.

12. Machine d'enrubannage de balles (101) selon l'une quelconque des revendications 8 à 11, l'agencement de vérins hydrauliques comprenant au moins deux cylindres hydrauliques à double effet (330, 331) qui sont agencés de sorte que, ensemble, ils forment un agencement de cylindre hydraulique à double effet à plusieurs étages pour déplacer le mécanisme (301) d'une position ouverte à une position fermée et de la position fermée à la position ouverte.

13. Machine d'enrubannage de balles (101) selon l'une quelconque des revendications précédentes, le mécanisme de coupe et de maintien (301) comprenant en outre un mécanisme autonettoyant pour éliminer tout résidu de matériau d'enrubannage (403) du mécanisme de coupe et de maintien lorsque le mécanisme de coupe et de maintien s'ouvre ou se ferme ou les deux, par exemple un grattoir, pour racler tout résidu de matériau d'enrubannage (403) du mécanisme de coupe et de maintien lorsque le mécanisme de coupe et de maintien s'ouvre ou se ferme ou les deux.

14. Machine d'enrubannage de balles (101) selon l'une quelconque des revendications précédentes, le mécanisme de coupe et de maintien (301) comprenant une partie de mise en contact de matériau d'enrubannage qui a au moins deux saillies avec un évidement entre eux de sorte que le matériau d'enrubannage (403) maintenu contre le mécanisme de coupe et de maintien (301) bute contre les projections et s'étend à travers l'évidement.

15. Machine d'enrubannage de balles (101) selon la revendication 14, la partie de mise en contact de matériau d'enrubannage ayant des saillies sous forme d'au moins trois cannelures.
